# EUROPEAN PATENT SPECIFICATION

(11) **EP 2 407 507 B1**
(45) Date of publication and mention of the grant of the patent: **28.09.2016**
(21) Application number: 10750902.8
(22) Date of filing: 11.03.2010
(51) Int. Cl.: C08L 15/00, C08C 19/25, C08F 236/10, C08K 3/04, C08K 3/36, B60C 1/00, C08C 19/44, C08K 3/00, C08K 5/548, C08L 9/06, C08L 9/00

(54) **RUBBER COMPOSITION AND PNEUMATIC TIRE**
KAUTSCHUKZUSAMMENSETZUNG UND LUFTREIFEN
COMPOSITION DE CAOUTCHOUC ET PNEU

(30) Priority: 11.03.2009 JP 2009058389; 11.03.2009 JP 2009058399; 11.03.2009 JP 2009058407
(43) Date of publication of application: 18.01.2012
(73) Proprietor: JSR Corporation, Tokyo 105-8640 (JP)
(72) Inventor: SONE, Takuo, Tokyo 105-8640 (JP); TANAKA, Ryouji, Tokyo 105-8640 (JP)
(74) Representative: TBK
(86) International application number: PCT/JP2010/054115
(87) International publication number: WO 2010/104149

(56) References cited:
- WO-A1-2008/050851
- JP-A- 2006 022 288
- JP-A- 2006 036 822
- JP-A- 2006 152 214
- JP-A- 2007 326 942
- US-A1- 2005 070 672
- US-A1- 2006 030 677
- US-A1- 2006 264 560
- US-A1- 2007 185 267
- US-A1- 2008 103 261
- US-A1- 2008 188 613
- US-B1- 6 194 505

## Description

### TECHNICAL FIELD

The present invention relates to a rubber composition from which a vulcanized rubber suitable for producing, for example, a pneumatic tire having excellent abrasion resistance, breaking strength, rolling resistance, wet skid resistance, and the like. can be prepared, as well as to a pneumatic tire having excellent abrasion resistance, breaking strength, rolling resistance, wet skid resistance, and the like.

### BACKGROUND ART

In order to respond to a demand for lower fuel consumption of automobile in recent years, it is desired to develop a rubber material capable of reducing the rolling resistance of tire. The reduction in the rolling resistance of tire is achieved by making smaller the energy loss of vulcanized rubber at low frequency. That is, the temperature of tire of automobile reaches 50 to 70°C during the running. The frequency of the external force applied to tire (tread rubber) during the running (the frequency is calculated from the speed of automobile and the diameter of tire) is several tens of Hz. Making smaller the energy loss at this temperature and this low frequency condition can give a tire of better fuel consumption. Thus, the idea of "energy loss of vulcanized rubber at low frequency" becomes an indicator for the evaluation of vulcanized rubber, relating to the fuel consumption of automobile in the actual use condition of tire. Meanwhile, as an indicator (laboratory indicator) for the evaluation of vulcanized rubber, relating to the fuel consumption when the actual running condition has been reproduced in a laboratory and not by an actual running, there is used "tan *δ* at 60°C (tan *δ* indicates energy loss)". Making smaller this "tan*δ* at 60°C" can give a tire of better fuel consumption.

Meanwhile, there is also a demand for higher running stability of automobile. In order to respond to this demand, it is also desired to develop a rubber material capable of increasing the frictional resistance of tire on ice or snow road or on dry road. The increase in frictional resistance of rubber material is achieved by making larger the energy loss of vulcanized rubber at high frequency. That is, the temperature of automobile tire reaches 50 to 70°C when the brake of the automobile has been applied. In that case, the tire receives an external force at a high frequency (several tens of thousands to several hundreds of thousands of Hz), owing to the invisible unevenness of road surface. Making larger the energy loss at this temperature and high frequency condition can give a tire of larger frictional resistance on road surface (i.e. higher running stability). Thus, the idea of "energy loss of vulcanized rubber at high frequency" becomes an indicator for the evaluation of vulcanized rubber, relating to the running stability in the actual use conditions of tire. However, since a testing machine for measuring at this high frequency is hard to procure, it is impossible to replace with a laboratory indicator of vulcanized rubber relating to the running stability as it is. Hence, the evaluation of vulcanized rubber by laboratory indicator relating to the running stability is conducted by converting frequency to temperature (under the condition of lowering frequency and, so as to match the lowering, lowering temperature) and measuring "tan *δ* at 0°C". Making larger this "tan *δ* at 0°C" can give a tire of better running stability.

As mentioned above, the demand for lower fuel consumption (reduction in rolling resistance) and the demand for higher running stability (increase in frictional resistance) are in an antinomic relationship, and it has been difficult to satisfy both of these two properties. In addition, with respect to the demand for lower fuel consumption, there is also a need for weight saving of tire, besides the reduction in rolling resistance. The lighter weight of tire necessarily needs the thinning of tread portion; in order to avoid the shortening of tire life, there is desired a rubber material improved in frictional property and breaking strength.

In order to satisfy such demand for lower fuel consumption and demand for higher running stability, it is being conducted to let include a filler into the rubber material. As a filler, there are, for example, carbon black used for the purpose of improvement of abrasion resistance or reinforcement, and silica used for the purpose of stability at high speed and lower fuel consumption. However, in the case of using silica, the compounding amount of carbon black necessarily decreases, thus, there is a problem of decrease in the abrasion resistance and breaking strength of tire. Also, the dispersibility of silica is low and the operability in conducting kneading becomes a big problem in actual production of tire.

As a rubber material remedying such problems in the case of using silica, there is disclosed a rubber composition comprising, as main components, a conjugated diene (co)polymer rubber having, in the polymer chain, an amino group and an alkoxysilyl group and having a particular weight-average molecular weight and a conjugated diene (co)polymer rubber having a particular weight-average molecular weight (see, for example, Patent Document 1). Also there is disclosed a rubber composition comprising a rubber component comprising a diene rubber having a particular functional group, silica and an aliphatic component (see, for example, Patent Document 2).

Futher there is disclosed a rubber composition comprising a rubber component comprising a modified conjugated diene polymer obtained by modifying the active terminals of conjugated diene polymers having cis-1,4 bond content of 75 mol % or more, at least with a hydrocarbyloxysilane compound, and silica (see, for example, Patent Document 3). Futhermore There is disclosed a pneumatic tire using a rubber composition comprising a rubber component comprising the above-mentioned modified conjugated diene polymer and a styrene-butadiene copolymer rubber (see, for example, Patent Document 4).

### PRIOR ART DOCUMENTS

### Patent Documents

Patent Document 1: WO 2005/085343 Pamphlet
Patent Document 2: WO 2006/016512 Pamphlet
Patent Document 3: JP-A-2007-308653 Gazette
Patent Document 4: JP-A-2007-326942 Gazette

### SUMMARY OF THE INVENTION

However, even the rubber compositions disclosed in Patent Documents 1 to 4, and the like have not been satisfactory to the high demand for lower consumption in recent years and to the demand for running stability.

The present invention has been made in view of such problems of conventional art. The present invention aims at providing a rubber composition from which a vulcanized rubber suitable for producing, for example, a pneumatic tire having excellent abrasion resistance, breaking strength, rolling resistance, wet skid resistance, and the like can be prepared. Also the present invention aims at providing a pneumatic tire having excellent abrasion resistance, breaking strength, rolling resistance, wet skid resistance, and the like.

The present inventors have earnestly studied in order to achieve the above tasks. As a result, it was found that the above tasks could be achieved by compounding a rubber component comprising a particular modified styrene-butadiene copolymer and a particular modified conjugated diene polymer, and a filler, at particular proportions. The finding has led to the completion of the present invention.

That is, according to the present invention, there are provided a rubber composition and a pneumatic tire, as shown below.

[1] A rubber composition comprising a rubber component (A) comprising a diene rubber comprising 20 mass % or more of a modified styrene-butadiene copolymer (a1) which is an terminal-modified styrene-butadiene copolymer and 5 mass % or more of a modified conjugated diene polymer (a2), and a filler (B), wherein the modified conjugated diene polymer (a2) is a polymer obtained by subjecting the active terminals of a conjugated diene polymer having a cis-1,4 bond content of 80% or higher, at least to primary modification with an alkoxysilane compound, and the filler (B) comprises at least either of 2 to 100 mass parts, relative to 100 mass parts of the rubber component (A), of carbon black (b1) and 30 to 100 mass parts, relative to 100 mass parts of the rubber component (A), of silica (b2).
[2] The rubber composition according to [1], which further comprises 5 to 20 mass parts, relative to 100 mass parts of the silica (b2), of a silane coupling agent, when the filler

### (B) comprises the silica (b2).

[3] The rubber composition according to [1] or [2], wherein the modified styrene-butadiene copolymer (a1) is a copolymer obtained by subjecting butadiene and styrene to anionic polymerization in a hydrocarbon solvent using, as an initiator, at least one compound selected from the group consisting of an organic alkaline metal, an organic alkaline earth metal, an alkaline metal amide compound and an alkaline earth metal amide compound, and then to a reaction of the active terminals of the obtained polymer with a modifier.
[4] The rubber composition according to any of [1] to [3], wherein the modified styrene-butadiene copolymer (a1) is a styrene-butadiene copolymer obtained by introducing, to the terminals of the styrene-butadiene copolymer, at least one functional group selected from the group consisting of epoxy group, hydroxyl group, primary amino group, secondary amino group, tertiary amino group, hetero ring, and alkoxysilyl group.
[5] The rubber composition according to any of [1] to [4], wherein the modified conjugated diene polymer (a2) is a conjugated diene polymer obtained by subjecting the active terminals of the conjugated diene polymer to primary modification with the alkoxysilane compound and then subjecting the resulting conjugated-diene polymer to secondary modification in the presence of a condensation accelerator.
[6] The rubber composition according to any of [1] to [5], wherein the alkoxysilane compound is at least one member selected from the group consisting of a compound represented by the following general formula (1), a compound represented by the following general formula (2), a compound represented by the following general formula (3), and partial condensates of these compounds.

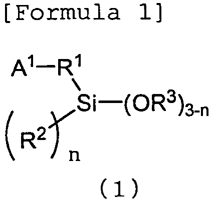

In the general formula (1), A¹ is a monovalent group having at least one functional group selected from the group consisting of (thio)epoxy group, (thio)isocyanate group, (thio)ketone group, (thio)aldehyde group, imino group, cyano group, amide group, isocyanuric acid trihydrocarbyl ester group, (thio)carboxylic acid ester group, metal salt of (thio)carboxylic acid, carboxylic acid anhydride, carboxylic acid halide, and carbonic acid dihydrocarbyl ester group; R¹ is a single bond or a bivalent inactive hydrocarbon group; R² and R³ are each independently a monovalent aliphatic hydrocarbon group of 1 to 20 carbon atoms or a monovalent aromatic hydrocarbon group of 6 to 18 carbon atoms; and n is an integer of 0 to 2. When there is a plurality of R²s, the R²s may be the same or different from each other. Additionally when there is a plurality of OR³s, the OR³s may be the same or different from each other. Incidentally, the compound represented by the general formula (1) contains, in the molecule, neither active proton nor onium salt.

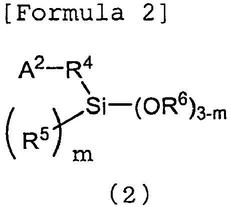

In the general formula (2), A² is a monovalent group having at least one functional group selected from the group consisting of cyclic or acyclic tertiary amino group, pyridyl group, sulfide group, and multi-sulfide group; R⁴ is a single bond or a bivalent inactive hydrocarbon group; R⁵ and R⁶ are each independently a monovalent aliphatic hydrocarbon group of 1 to 20 carbon atoms or a monovalent aromatic hydrocarbon group of 6 to 18 carbon atoms; and m is an integer of 0 to 2. When there is a plurality of R⁵s, the R⁵s may be the same or different from each other. Additionally when there is a plurality of OR⁶s, the OR⁶s may be the same or different from each other. Incidentally, the compound represented by the general formula (2) contains, in the molecule, neither active proton nor onium salt.

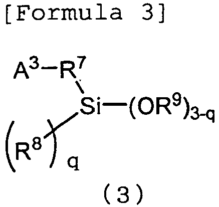

In the general formula (3), A³ is a monovalent group having at least one functional group selected from the group consisting of hydroxyl group, thiol group, primary amino group, onium salt of primary amine, cyclic or acyclic secondary amino group, onium salt of cyclic or acyclic secondary amine, onium salt of cyclic or acyclic tertiary amine, group having aryl Sn bond or arylalkyl Sn bond, sulfonyl group, and sulfinyl group; R⁷ is a single bond or a bivalent inactive hydrocarbon group; R⁸ and R⁹ are each independently a monovalent aliphatic hydrocarbon group of 1 to 20 carbon atoms or a monovalent aromatic hydrocarbon group of 6 to 18 carbon atoms; and q is an integer of 0 to 2. When there is a plurality of R⁸s, the R⁸s may be the same or different from each other. Additionally when there is a plurality of OR⁹s, the OR⁹s may be the same or different from each other.

[7] The rubber composition according to [6], wherein the alkoxysilane compound is at least either of the compound represented by the general formula (1) and the partial condensate of the compounds represented by the general formula (1).
[8] The rubber composition according to [7], wherein the alkoxysilane compound is at least one member selected from the group consisting of 3-glycidoxypropyltrimethoxysilane, 3-glycidoxypropyltriethoxysilane, and partial condensate of these compounds.
[9] The rubber composition according to [5], wherein the condensation accelerator comprises at least one compound selected from the group consisting of a carboxylate of 3 to 20 carbon atoms, with tin of oxidation number 2, represented by the following general formula (10), a compound of tin of oxidation number 4, represented by the following general formula (11), and a compound of titanium of oxidation number 4, represented by the following general formula (12) and water.

   Sn(OCOR¹⁷)₂ (10)

   [In the general formula (10), R¹⁷s are each independently an organic group of 2 to 19 carbon atoms.]

   R¹⁸ᵣSnA⁴ₜB¹₍₄₋ₜ₋ᵣ₎ (11)

   [In the general formula (11), A⁴ is a siloxy group substituted with total of three substituents (which may be the same or different from each other) selected from the group consisting of an aliphatic carboxylic acid residue of 2 to 30 carbon atoms, a 1,3-dicarbonyl-containing group of 5 to 30 carbon atoms, a hydrocarbyloxy group of 1 to 30 carbon atoms, and a hydrocarbyl group of 1 to 20 carbon atoms; B¹ is a hydroxyl group or a halogen atom; R¹⁸ is an aliphatic hydrocarbon group of 1 to 30 carbon atoms; r is an integer of 1 to 3; t is an integer of 1 or 2; and t+r = 3 or 4. When there is a plurality of A⁴s, the A⁴s may be the same or different from each other. When there is a plurality of R¹⁸s, the R¹⁸s may be the same or different from each other.]

   A⁵ₓTiB²₍₄₋ₓ₎ (12)

   [In the general formula (12), A⁵ is a siloxy group substituted with total of three substituents selected from the group consisting of a hydrocarbyloxy group of 1 to 30 carbon atoms and an alkyl group of 1 to 30 carbon atoms; B² is a 1,3-dicarbonyl-containing group of 5 to 30 carbon atoms; and x is an integer of 2 or 4. When there is a plurality of A⁵s, the A⁵s may be the same or different from each other. When there is a plurality of B²s, the B²s may be the same or different from each other.]
[10] The rubber composition according to any of [1] to [9], wherein the modified conjugated diene polymer (a2) is a modified polybutadiene.
[11] The rubber composition according to any of [1] to [10], which is used for a vulcanized rubber for tire tread.
[12] A pneumatic tire produced using a rubber composition according to any of [1] to [11].

The rubber composition of the present invention exhibits such an effect that it can prepare a vulcanized rubber suitable for producing, for example, a pneumatic tire having excellent abrasion resistance, breaking strength, rolling resistance, wet skid resistance, and the like.

The pneumatic tire of the present invention exhibits such an effect that it has excellent abrasion resistance, breaking strength, rolling resistance, wet skid resistance, and the like.

### MODE FOR CARRYING OUT THE INVENTION

The mode for carrying out the present invention is described below. However, the present invention is in no way restricted to the following embodiment and it should be construed that even embodiments which modifications and improvements are added appropriately to the following embodiment based on the ordinary knowledge possessed by those skilled in the art, as long as there is no deviation from the gist of the present invention fall within the scope of the present invention.

### 1. Rubber composition

The rubber composition of the present invention comprises a rubber component (A) and a filler (B). The details thereof are described below.

### (Rubber component (A))

The rubber component (A) comprises a diene rubber. This diene rubber comprises a modified styrene-butadiene copolymer (a1) (hereinafter also referred to as "copolymer (a1)") and a modified conjugated diene polymer (a2) (hereinafter also referred to as "polymer (a2)"). Incidentally, it is preferred that the diene rubber consists essentially of copolymer (a1) and the polymer (a2).

### (Diene rubber)

The content of the copolymer (a1) comprised in the diene rubber is 20 mass % or more, preferably 20 to 95 mass %, more preferably 25 to 90 mass %, when the total of the copolymer (a1) and the polymer (a2) is 100 mass %. When the content of the copolymer (a1) is less than 20 mass %, the vulcanized rubber may be inferior in breaking strength, abrasion resistance and rolling resistance.

Additionally, the content of the polymer (a2) comprised in the diene rubber is 5 mass % or more, preferably 5 to 80 mass %, more preferably 10 to 75 mass %, when the total of the copolymer (a1) and the polymer (a2) is 100 mass %. When the content of the polymer (a2) is less than 5 mass %, the vulcanized rubber may be inferior in breaking strength, abrasion resistance and rolling resistance. Incidentally, it is preferred that the diene rubber consists essentially of copolymer (a1) and polymer (a2), and it is further preferred that the rubber component (A) consists essentially of copolymer (a1) and polymer (a2).

### (Modified styrene-butadiene copolymer (a1))

The copolymer (a1) is a terminal-modified styrene-butadiene copolymer (modified SBR). The content of the 1,3-butadiene-derived structural unit comprised in the copolymer (a1) is ordinarily 55 to 99 mass %, preferably 55 to 95 mass %, more preferably 58 to 90 mass % of the total structural units. Additionally, the vinyl bond content in the 1,3-butadiene-derived structural unit is ordinarily 70% or less, preferably 15 to 70%, more preferably 18 to 67%. When the vinyl bond content is more than 70%, the vulcanized rubber may be inferior in breaking strength, abrasion resistance and rolling resistance. Incidentally, the vinyl bond content in the 1,3-butadiene-derived structural unit can be controlled by adding at least either of an ether compound or a tertiary amine compound into the polymerization reaction.

As specific examples of ether compound, there can be mentioned diethyl ether, di-n-butyl ether, ethylene glycol diethyl ether, ethylene glycol dibutyl ether, diethylene glycol dimethyl ether, propylene glycol dimethyl ether, propylene glycol diethyl ether, propylene glycol dibutyl ether, tetrahydrofuran, 2,2-bis(tetrahydrofurfuryl)propane, bistetrahydrofurfurylformal, methyl ether of tetrahydrofurfuryl alcohol, ethyl ether of tetrahydrofurfuryl alcohol, butyl ether of tetrahydrofurfuryl alcohol, *α-*methoxytetrahydrofuran, dimethoxybenzene, dimethoxyethane, and the like.

Additionally, as specific examples of tertiary amine compound, there can be mentioned triethylamine, N,N,N',N'-tetramethylethylenediamine, dipiperidinoethane, methyl ether of N,N-diethylethanolamine, ethyl ether of N,N-diethylethanolamine, butyl ether of N,N-diethylethanolamine, and the like.

The content of the styrene-derived structural unit comprised in the copolymer (a1) is ordinarily 45 mass % or less, preferably 5 to 42 mass % of the total structural units. When the content of the styrene-derived structural unit is more than 45 mass %, the low-temperature properties, the wet skid resistance and the abrasion resistance may become worse.

The copolymer (a1) may further comprise, besides the 1,3-butadiene-derived structural unit and the styrene-derived structural unit, a structural unit derived from polyfunctional monomers, as necessary. As specific examples of the polyfunctional monomer, there can be mentioned divinylbenzene , diisopropenylbenzene, and the like. Incidentally, the content of the polyfunctional monomer-derived structural unit in the copolymer (a1) is preferably less than 10 mass %, more preferably 5 mass % or less of the total structural units.

As to the method for preparing the copolymer (a1), there is no particular restriction. However, the copolymer (a1) is preferably prepared, for example, by polymerizing butadiene and styrene in a hydrocarbon solvent by anionic polymerization using, as an initiator, at least one compound selected from the group consisting of an organic alkaline metal, an organic alkaline earth metal, an alkaline metal amide compound, and an alkaline earth metal amide compound, and then to a reaction of the active terminals of the polymer, with a modifier. This method enables the production of the copolymer (a1) in one reaction, easily, at a high yield.

There is no particular restriction as to the reaction conditions of the anionic polymerization. The monomer components may be fed all in one portion or fed in devided portions. Additionally, the conditions such as reaction temperature, reaction time, and the like can be selected appropriately depending upon, for example, the kinds and amounts of monomer components.

There is no particular restriction as to the kind of the hydrocarbon solvent. As specific examples of the hydrocarbon solvent, there can be mentioned butane, pentane, hexane, heptane, octane, methylcyclopentane, cyclohexane, benzene, toluene, xylene, and the like. Of these, preferred are butane, pentane, cyclohexane, hexane and heptane.

As specific examples of the organic alkaline metal and organic alkaline earth metal, used as the polymerization initiator, there can be mentioned alkyl lithiums such as n-butyl lithium, sec-butyl lithium, tert-butyl lithium and the like; alkylene dilithiums such as 1,4-dilithiobutane and the like; phenyl lithium; stilbene lithium, lithium naphthalene, sodium naphthalene, potassium naphthalene, n-butyl magnesium, n-hexyl magnesium, ethoxy calcium, calcium stearate, tert-butoxy strontium, ethoxy barium, isopropoxy barium, ethyl mercapto barium, tert-butoxy barium, phenoxy barium, diethyl amino barium, barium stearate, and the like.

Additionally, as specific examples of the alkaline metal amide compound and alkaline earth metal amide compound, used as polymerization initiator, there can be mentioned compounds obtained by reacting the above-mentioned organic alkaline metal or organic alkaline earth metal with a secondary amine compound or a tertiary amine compound. In this case, it is preferred to use an alkyl lithium as the organic alkaline metal and it is more preferred to use n-butyl lithium, sec-butyl lithium, or tert-butyl lithium.

As specific examples of the secondary amine compound, there can be mentioned dimethylamine, diethylamine, dipropylamine, di-n-butylamine, di-sec-butylamine, dipentylamine, dihexylamine, di-n-octylamine, di-(2-ethylhexyl)amine, dicyclohexylamine, N-methylbenzylamine, diallylamine, morpholine, piperazine, 2,6-dimethylmorpholine, 2,6-dimethylpiperazine, 2-methylpiperazine, piperidine, 3,3-dimethylpiperidine, 2,6-dimethylpiperidine, 2,2,6,6-teramethylpiperidine, pyrrolidine, 2,5-dimethylpyrrolidine, azetidine, hexamethyleneimine, heptamethyleneimine, 5-benzyloxyindole, 3-azaspiro[5,5]undecane, 3-azabicyclo[3.2.2]nonane, carbazole, and the like.

Additionally, as specific examples of the tertiary amine compound, there can be mentioned N,N-dimethyl-o-toluidine, N,N-dimethyl-p-toluidine, N,N-dimethyl-m-toluidine, α-picoline, *β*-picoline, γ-picoline, benzyldimethylamine, benzyldiethylamine, benzyldipropylamine, benzyldibutylamine, (o-methylbenzyl)dimethylamine, (m-methylbenzyl)dimethylamine, (p-methylbenzyl)dimethylamine, N,N-tetramethylene-o-toluidine, N,N-heptamethylene-o-toluidine, N,N-hexamethylene-o-toluidine, N,N-trimethylenebenzylamine, N,N-tetramethylenebenzylamine, N,N-hexamethylenebenzylamine, N,N-tetramethylene(o-methylbenzyl)amine, N,N-tetramethylene(p-methylbenzyl)amine, N,N-hexamethyene(o-methylbenzyl)amine, N,N-hexamethylene(p-methylbenzyl)amine, and the like.

The reaction with the modifier is conducted ordinarily under the temperature conditions of 0 to 120°C. Incidentally, the modification reaction may be conducted under a constant temperature condition or may be conducted under an increasing temperature condition. The time of the modification reaction is ordinarily 5 minutes or more, preferably 10 minutes or more.

As specific examples of the modifier, there can be mentioned the following compounds (groups). That is, there can be mentioned polyhydric alcohol polyglycidyl ethers such as ethylene glycol diglycidyl ether, glycerine triglycidyl ether, trimethylolethane triglycidyl ether, trimethylolpropane triglycidyl ether and the like; polyglycidyl ethers of aromatic compounds having two or more phenolic groups such as bisphenol A diglycidyl ether and the like; polyepoxy compounds such as 1,4-diglycidylbenzene, 1,3,5-triglycidylbenzene, polyepoxidized liquid polybutadiene and the like; epoxy group-containing tertiary amines such as 4,4'-diglycidyl-diphenylmethylamine, 4,4'-diglycidyl-dibenzylmethylamine and the like; glycidylamino compounds such as diglycidylaniline, N,N'-diglycidyl-4-glycidyloxyaniline, diglycidyl-o-toluidine, tetraglydicyl-m-xylenediamine, tetraglycidylaminodiphenylmethane, tetraglycidyl-p-phenylenediamine, diglycidylaminomethylcyclohexane, tetraglycidyl-1,3-bisaminomethylcyclohexane and the like;

Amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, N,N-diethylcarbamic acid chloride and the like; epoxy group-containing silane compounds such as 1,3-bis-(glycidyloxypropyl)-tetramethyldisiloxane, (3-glycidyloxypropyl)-pentamethyldisiloxane and the like; tertiary, secondary amino group and/or primary amino group-containing alkoxysilane compounds such as 3-dimethylaminopropyl(triethoxy)silane, 3-dimethylaminopropyl(trimethoxy)silane, 3-diethylaminopropyl(triethoxy)silane, 3-diethylaminopropyl(trimethoxy)silane, 2-dimethylaminoethyl(triethoxy)silane, 2-dimethylaminoethyl(trimethoxy)silane, 3-dimethylaminopropyl(diethoxy)methylsilane, 3-dibutylaminopropyl(triethoxy)silane,

N-[3-(trimethoxysilyl)-propyl]-N,N'-diethyl-N'-trimethylsilyl-ethane-1,2-diamine, N-[3-(triethoxysilyl)-propyl]-N,N'-diethyl-N'-trimethylsilyl-ethane-1,2-diamine, N-[3-(methyldimethoxysilyl)-propyl]-N,N'-diethyl-N'-trimethylsiyl-ethane-1,2-diamine, N-[3-(methyldimethoxysilyl)-propyl]-N,N'-diethyl-N'-trimethylsilyl-p-phenylenediamine, N-[3-(triethoxysilyl)-propyl]-N,N'-diethyl-N'-trimethylsilyl-p-phenylenediamine, N-[3-(diethoxymethylsilyl)-propyl]-N-ethyl-N'-(2-ethoxyethyl)-N'-trimethylsilyl-ethane-1,2-diamine, N-[3-(tripropoxysilyl)-propyl]-N-propyl-N'-(2-ethoxyethyl)-N'-triethylsilyl-p-phenylenediamine, N-[2-(diethoxymethylsilyl)-1-ethyl]-N-ethyl-N'-(2-diethylamino-ethyl) N'-triethylsilyl-ethane-1,2-diamine, N-(3-(triethoxysilyl)-propyl]-N-ethyl-N'-(2-diethylaminoethyl)-N'-triethylsilyl-ethane-1,2-diamine, N-[2-(trimethoxysilyl)-ethyl]-N,N',N'-trimethylethane-1,2-diamine, N-[2-(dimethoxymethylsilyl)-ethyl]-N-ethyl-N',N'-dimethylethane-1,2-diamine,

N-[3-(trimethoxysilyl)-propyl]-N,N',N'-trimethylpropane-1,3-diamine, N-[3-(dimethoxymethylsilyl)-propyl]-N-ethyl-N',N'-dimethylpropane-1,3-diamine, N-[3-(triethoxysilyl)-propyl]-N,N',N'-triethyl-2-methylpropane-1,3-diamine, N-[3-(dimethoxymethylsilyl)-propyl]-2,N,N',N'-tetramethylpropane-1,3-diamine, N-(2-dimethylaminoethyl)-N'-[2-(trimethoxysilyl)-ethyl]-N,N'-dimethylethane-1,2-diamine, N-[2-(diethoxypropylsilyl)-ethyl]-N'-(3-ethoxypropyl)-N,N'-dimethylethane-1,2-diamine, N-[2-(trimethoxysilyl)-ethyl]-N'-methoxymethyl-N,N'-dimethylethane-1,2-diamine, N-[2-(trimethoxysilyl)-ethyl]-N,N'-dimethyl-N'-(2-trimethylsilylethyl)-ethane-1,2-diamine, N-[2-(triethoxysilyl)-ethyl]-N,N'-diethyl-N'-(2-dibutylmethoxysilylethyl)-ethane-1,2-diamine,

N,N-bis(trimethylsilyl)aminopropylmethyldimethoxysilane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, N,N-bis(trimethylsilyl)aminoethylmethyldiethoxysilane, N,N-bis(triethylsilyl)aminopropylmethyldimethoxysilane, N,N-bis(triethylsilyl)aminopropyltrimethoxysilane, N,N-bis(triethylsilyl)aminopropyltriethoxysilane, N,N-bis(triethylsilyl)aminopropylmethyldiethoxysilane, N,N-bis(triethylsilyl)aminoethyltrimethoxysilane, N,N-bis(triethylsilyl)aminoethyltriethoxysilane, N,N-bis(triethylsilyl)aminoethylmethyldimethoxysilane, N,N-bis(triethylsilyl)aminoethylmethyldiethoxysilane,

N,N',N'-tris(trimethylsilyl)-N-(2-aminoethyl)-3-aminopropyltriethoxysilane, N,N',N'-tris(trimethylsilyl)-N-(2-aminoethyl)-3-aminopropylmethyldiethoxysilane, N,N',N'-tris(trimethylsilyl)-N-(2-aminoethyl)-3-aminopropyltrimethoxysilane, N,N',N'-tris(trimethylsilyl)-N-(2-aminoethyl)-3-aminopropylmethyldimethoxysilane, 1-(3-triethoxysilylpropyl)-2,2,5,5-tetramethyl-1-aza-2,5-disilacyclopentane, 1-(3-trimethoxysilylpropyl)-2,2,5,5-tetramethyl-1-aza-2,5-disilacyclopentane, 1-(3-methyldiethoxysilylpropyl)-2,2,5,5-tetramethyl-1-aza-2,5-disilacyclopentane, 1-(3-methyldimethoxysilylpropyl)-2,2,5,5-tetramethyl-1-aza-2,5-disilacyclopentane, 1-trimethylsilyl-2,2-dimethoxy-1-aza-2-silacyclopentane and the like;

hetero ring-containing alkoxysilane compounds such as 3-(1-hexamethyleneimino)propyl(triethoxy)silane, 3-(1-hexamethyleneimino)propyl(trimethoxy)silane, (1-hexamethyleneimino)methyl(trimethoxy)silane, (1-hexamethyleneimino)methyl(triethoxy)silane, 2-(1-hexamethyleneimino)ethyl(triethoxy)silane, 2-(1-hexamethyleneimino)ethyl(trimethoxy)silane, 3-(1-pyrrolidinyl)propyl(triethoxy)silane, 3-(1-pyrrolidinyl)propyl(trimethoxy)silane, 3-(1-heptamethyleneimino)propyl(triethoxy)silane, 3-(1-dodecamethyleneimino)propyl(triethoxy)silane, 3-(1-hexamethyleneimino)propyl(diethoxy)methylsilane, 3-(1-hexamethyleneimino)propyl(diethoxy)ethylsilane, 2-(trimethoxysilylethyl)pyridine, 2-(triethoxysilylethyl)pyridine, 4-(trimethoxysilylethyl)pyridine, 4-(triethoxysilylethyl)pyridine, 3-(4-trimethylsilyl-1-piperazino)propylmethyldimethoxysilane, 3-(4-trimethylsilyl-1-piperazino)propyltriethoxysilane, 3-(4-trimethylsilyl-1-piperazino)propyltributoxysilane, 3-(3-trimethylsilyl-1-imidazolidinyl)propylethyldiethoxysilane, 3-(3-trimethylsilyl-1-imidazolidinyl)propyltriethoxysilane, 3-(3-trimethylsilyl-1-hexahydropyrimidinyl)propylmethyldimethoxysilane, 3-(3-trimethylsilyl-1-hexahydropyrimidinyl)propyltriethoxysilane, 4-(4-trimethylsilyl-l-piperazinyl)butyltriethoxysilane, 1-[3-(triethoxysilyl)-propyl]-4-methylpiperazine, 1-[3-(diethoxyethylsilyl)-propyl]-4-methylpiperazine,

1-[3-(trimethoxysilyl)-propyl]-3-methylimidazolidine, 1-[3-(diethoxyethylsilyl)-propyl]-3-ethylimidazolidine, 1-[3-(triethylsilyl)-propyl]-3-methylhexahydropyrimidine, 1-[3-(dimethoxymethylsilyl)-propyl]-3-methylhexahydropyrimidine, 3-[3-(tributoxysilyl)-propyl]-1-methyl-1,2,3,4-tetrahydropyrimidine, 3-[3-(dimethoxymethylsilyl)-propyl]-1-ethyl-1,2,3,4-tetrahydropyrimidine, 1-(2-ethoxyethyl)-3-[3-(trimethoxysilyl)-propyl]-imidazolidine, 2-{3-[3-(trimethoxysilyl)-propyl]-tetrahydropyrimidine-1-yl}-ethyldimethylamine, 2-(trimethoxysilyl)-1,3-dimethylimidazolidine, 2-(diethoxyethylsilyl)-1,3-diethylimidazolidine, 2-(triethoxysilyl)-1,4-diethylpiperazine, 2-(dimethoxymethylsilyl)-1,4-dimethylpiperazine, 5-(triethoxysilyl)-1,3-dipropylhexahydropyrimidine, 5-(diethoxyethylsilyl)-1,3-diethylhexahydropyrimidine, 2-[3-(2-dimethylaminoethyl)-2-(ethyldimethoxysilyl)-imidazolidin-1-yl]-ethyl-dimethylamine,

5-(trimethoxysilyl)-1,3-bis-(2-methoxysilyl)-hexahydropyrimidine, 5-(ethyldimethoxysilyl)-1,3-bis-(2-trimethylsilylethyl)-hexahydropyrimidinyl)-1,3-dimethylimidazolidine, 2-(3-diethoxyethylsilyl-propyl)-1,3-diethylimidazolidine, 2-(3-triethoxysilyl-propyl)-1,4-diethylpiperazine, 2-(3-dimethoxymethylsilyl-propyl)-1,4-dimethylpiperazine, 5-(3-triethoxysilyl-propyl)-1,3-dipropylhexahydropyrimidine, 5-(3-diethoxyethylsilyl-propyl)-1,3-diethylhexahydropyrimidine, 2-[3-(2-dimethylaminoethyl)-2-(3-ethyldimethoxysilyl-propyl)-imidazolidin-1-yl]-ethyl-dimethylamine, 5-(3-trimethoxysilyl-propyl)-1,3-bis-(2-methoxyethyl)-hexahydropyrimidine, 5-(3-ethyldimethoxysilyl-propyl)-1,3-bis-(2-trimethylsilylethyl)-hexahydropyrimidine, 3-[3-(trimethylsilylethylamino)-1-pyrrolidinyl]-propyl-methyldiethoxysilane, 3-[3-(trimethylsilylpropylamino)-1-pyrrolidinyl]-propyl-triethoxysilane, and the like;

Sulfide group-containing silane compounds such as (trimethylsilyl) [3-(trimethoxysilyl)propyl] sulfide, (trimethylsilyl) [3-(triethoxysilyl)propyl] sulfide, (trimethylsilyl) [3-(tripropoxysilyl)propyl] sulfide, (trimethylsilyl) [3-(tributoxysilyl)propyl] sulfide, (trimethylsilyl) [3-(methyldimethoxysilyl)propyl] sulfide, (trimethylsilyl) [3-(methyldiethoxysilyl)propyl] sulfide, (trimethylsilyl) [3-(methyldipropoxysilyl)propyl] sulfide, (trimethylsilyl) [3-(methyldibutoxysilyl)propyl] sulfide and the like;

N-substituted azilidine compounds such as ethyleneimine, propyleneimine and the like; alkoxysilanes such as methyltriethoxysilane and the like; (thio)benzophenone compounds having amino group and/or substituted amino group, such as 4-N,N-dimethylaminobenzophenone, 4-N,N-di-tert-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, N,N,N',N'-bis-(tetraethylamino)benzophenone and the like; benzaldehyde compounds having amino group and/or substituted amino group, such as 4-N,N-dimethylaminobenzaldehyde, 4-N,N-diphenylaminobenzaldehyde, 4-N,N-divinylaminobenzaldehyde and the like; N-substituted pyrrolidones such as N-methyl-2-pyrrolidone, N-vinyl-2-pyrrolidone, N-phenyl-2-pyrrolidone, N-tert-butyl-2-pyrrolidone, N-methyl-5-methyl-2-pyrrolidone and the like; N-substituted piperidones such as N-methyl-2-piperidone, N-vinyl-2-piperidone, N-phenyl-2-piperidone and the like; N-substituted lactams such as N-methyl-ε-caprolactam, N-phenyl-ε-caprolactam, N-methyl-*ω-*laurylolactam, N-vinyl-ω-laurylolactam, N-methyl-*β-*propiolactam, N-phenyl-*β*-propiolactam and the like; and moreover,

N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone, and the like.

The modification of the terminal of a styrene-butadiene copolymer using the above-mentioned modifier enables the production of the copolymer (a1). Incidentally, the obtained copolymer (a1) is preferably a styrene-butadiene copolymer in which at least one functional group selected from the group consisting of epoxy group, hydroxyl group, primary amino group, secondary amino group, tertiary amino group, hetero ring, and alkoxysilyl group is introduced at the terminals of the styrene-butadiene copolymer.

The styrene-equivalent weight-average molecular weight (Mw) by gel permeation column chromatography of the copolymer (a1) is preferably 150,000 to 2,000,000, more preferably 150,000 to 1,500,000, particularly preferably 160,000 to 1,000,000. When the Mw of the copolymer (a1) is smaller than 150,000, the obtained vulcanized rubber may be inferior in tensile strength, abrasion resistance and rolling resistance. Meanwhile, when the Mw is larger than 2,000,000, the obtained rubber composition may be inferior in processability, or in the dispersibility of the filler (B) in kneading, or the vulcanized rubber may be inferior in tensile strength, abrasion resistance, rolling resistance and wet skid resistance.

The glass transition temperature (Tg) of the copolymer (a1) measured based on ASTM D 3418 is ordinarily -5°C or lower, preferably -10°C or lower, more preferably -10 to -90°C. By controlling the glass transition temperature (Tg) of the copolymer (a1) at -5°C or lower, the vulcanized rubber can have improved rolling resistance without deteriorating its wet skid resistance. Incidentally, the glass transition temperature (Tg) of the copolymer (a1) can be controlled by adjusting the vinyl bond content in the 1,3-butadiene-derived structural unit or the content of the styrene-derived structural unit.

The Mooney viscosity (ML₁₊₄, 100°C) of the copolymer (a1) is preferably 20 to 200, more preferably 30 to 100. When the Mooney viscosity (ML₁₊₄, 100°C) of the copolymer (a1) is lower than 20, the vulcanized rubber may be inferior in tensile strength, abrasion resistance and rolling resistance. Meanwhile, when the Mooney viscosity (ML₁₊₄, 100°C) of the copolymer (a1) is higher than 200, the obtained rubber composition may be inferior in processability. However, even when the Mooney viscosity (ML₁₊₄, 100°C) is higher than 200, the Mooney viscosity may be reduced by adding an extender oil or a liquid polymer having a weight-average molecular weight (Mw) of smaller than 150,000. In particular, the addition of an extender oil is preferred because the filler (B) can be dispersed finely and uniformly thereby, allowing for improved processability, improved vulcanizability and, in particular, improved abrasion resistance.

As specific examples of the extender oil, a mineral oil, a softening agent, and the like can be mentioned. The viscosity-gravity constant (hereinafter referred to as "V.G.C") of the extender oil is preferably 0.790 to 1.100, more preferably 0.790 to 1.049, particularly preferably 0.790 to 0.999, most preferably 0.790 to 0.949.

When the extender oil is added, the addition amount thereof is ordinarily 10 to 100 mass parts, preferably 15 to 90 mass parts relative to 100 mass parts of the copolymer (a1). When the addition amount of the extender oil is smaller than 10 mass parts, the effect of extender oil addition may not be obtained. Meanwhile, when the addition amount is larger than 100 mass parts, the copolymer (a1) may become significantly soft and the obtained rubber composition may be inferior in processability.

### (Modified conjugated diene polymer (a2))

The polymer (a2) is a polymer obtained by subjecting the active terminals of a conjugated diene polymer where the cis-1,4 bond content is 80% or more to primary modification with an alkoxysilane compound.

The content of the polymer (a2) contained in the diene rubber is 5 mass % or more, preferably 5 to 80 mass %, more preferably 10 to 75 mass % relative to the total of the diene rubber. When the content of the polymer (a2) contained in the diene rubber is smaller than 5 mass %, the obtained vulcanaized rubber becomes low in rolling resistance and wet skid resistance.

The Mooney viscosity (ML₁₊₄, 100°C) of the polymer (a2) is preferably 10 to 150, more preferably 15 to 70. When the Mooney viscosity is lower than 10, the obtained vulcanaized rubber tends to become low in properties such as tensile strength. Meanwhile, when the Mooney viscosity is higher than 150, the rubber composition becomes low in processability, and kneading with the filler (B), and the like tends to be difficult.

The polymer (a2) can be prepared, for example, by polymerizing a conjugated diene compound, together with other monomer as necessary, in the presence of a polymerization catalyst to obtain a conjugated diene polymer and then subjecting the active terminals of the obtained conjugated diene polymer to primary modification with an alkoxysilane compound.

### (Conjugated diene polymer)

The conjugated diene polymer used for preparation of the polymer (a2) has, in the conjugated diene compound-derived structural unit, a cis-1,4 bond content of 80 % or more, preferably 82 % or more, more preferably 84 % or more. As to the polymerization reaction method for preparing this conjugated diene polymer, there is no particular restriction, and there can be used a known conventional methods such as solution polymerization method, gas phase polymerization method, bulk polymerization method or the like. Of these, solution polymerization method is preferred. In the solution polymerization method, it is preferable to use an organic solvent inert in the reaction, as a polymerization solvent. As specific examples of the organic solvent used as a polymerization solvent, there can be mentioned hydrocarbon solvents such as aliphatic solvent, alicyclic solvent, aromatic solvent and the like. More specifically, there can be mentioned propane, n-butane, isobutane, n-pentane, isoptentane, n-hexane, cyclohexane, propene, 1-butene, isobutene, trans-2-butene, cis-2-butene, 1-pentene, 2-pentene, 1-hexene, 2-hexene, benzene, toluene, xylene, ethylbenzene, and the like. Meanwhile these solvents can be used individually or in combination of two or more kinds.

In the polymerization, the reaction temperature is preferably -80 to 150°C, more preferably -20 to 120°C. additionally, in the polymerization, the pressure is preferably a pressure sufficient for keeping the monomer (conjugated diene compound) substantially at a liquid phase. Incidentally, although the pressure depends upon, for example, the kinds of monomer and solvent or the temperature of reaction, it is preferable to conduct polymerization at a pressure. Such a high pressure can be controlled, for example, by operation such as pressurizing the reaction vessel with an inert gas. Incidentally, it is preferable that every raw material to be used such as polymerization catalyst, organic solvent, monomer(s) and the like is substantially free of reaction inhibiting substances such as water, oxygen, carbon dioxide and protic compound.

As specific examples of the conjugated diene compound, there can be mentioned 1,3-butadiene, isoprene, 1,3-pentadiene, 2,3-dimethyl-1,3-butadiene, 2-phenyl-1,3-butadiene, 1,3-hexadiene, and the like. Of these, 1,3-butadiene is preferred (that is, the polymer (a2) is preferably a modified polybutadiene). Incidentally, these conjugated diene compounds can be used individually or in combination of two or more kinds.

The conjugated diene polymer may have a structure derived from a monomer other than the conjugated diene compound. However, the conjugated diene compound is used preferably in an amount of 80 mol % or more relative to the total monomers.

In order to achieve a cis-1,4 bond content of the conjugated diene polymer, of 80 % or more, the polymerization reaction is conducted preferably in the presence of a polymerization catalyst. As a polymerization catalyst, a catalyst described in WO 03/046020 Pamphlet can be used preferably. More specifically, polymerization catalysts having the following components (e) to (g) as main components are preferred. By using such a polymerization catalyst, there can be prepared a conjugated diene polymer which has a narrow molecular weight distribution and a cis-1,4-bond content of 80 % or more. Moreover, this polymerization catalyst is inexpensive as compared with conventionally used metallocene catalyst and needs no polymerization reaction at extremely low temperature. Therefore, the polymerization reaction using this polymerization catalyst is easy in operation and useful as a step for industrial production.

Component (e): Lanthanoid element-containing compound containing at least either of lanthanoid elements (rare earth elements of atomic numbers 57 to 71 of periodic table), or reaction product obtained by the reaction of lanthanoid element-containing compound with Lewis base
Component (f): Alumoxane, and /or organic aluminum compound represented by the general formula (4) AlR¹⁰R¹¹R¹⁶ (in the general formula (4), R¹⁰ and R¹¹ are each independently a hydrogen atom or a hydrocarbon group of 1 to 10 carbon atoms, and R¹⁶ is a hydrocarbon group of 1 to 10 carbon atoms)
Component (g): Halogen-containing compound containing at least one halogen element in the molecular structure

The component (e) is a lanthanoid element-containing compound containing at least either of lanthanoid elements (rare earth elements of atomic numbers 57 to 71 of periodic table), or a reaction product obtained by the reaction of the lanthanoid element-containing compound with a Lewis base. As specific examples of the lanthanoid element, there can be mentioned neodymium, praseodymium, cerium, lanthanum, gadolinium, samarium, and the like. Of these, neodymium is preferred. Incidentally, these lanthanoid elements can be used individually or in combination of two or more kinds. As specific examples of the lanthanoid element-containing compound, there can be mentioned carboxylates, alkoxides, *β*-diketone complexes, phosphates, phosphites, and the like of lanthanoid elements. Of these, carboxylates or phosphates of lanthanoid elements are preferred, and carboxylates of lanthanoid elements are more preferred.

As specific examples of the carboxylate of lanthanoid element, there can be mentioned compounds represented by the general formula (5) (R¹³-CO₂)₃M [wherein, M is a lanthanoid element and R¹³ is a hydrocarbon group of 1 to 20 carbon atoms (preferably saturated or unsaturated, and straight-chained, branched-chained or cyclic)]. Incidentally, the carboxyl group bonds to a primary, secondary or tertiary carbon atom. As specific examples of the carboxyl group, there can be mentioned salts of octanoic acid, 2-ethylhexanoic acid, oleic acid, stearic acid, benzoic acid, naphthenic acid, and Versatic Acid (trade name, a product of Shell Chemical) (a carboxylic acid in which carboxyl group bonds to a tertiary carbon atom), and the like. Of these, a salt of 2-ethylhexanoic acid, naphthenic acid or Versatic Acid is preferred.

As specific examples of the alkoxide of lanthanoid element, there can be mentioned compounds represented by the general formula (6) (R¹⁴O)₃M [wherein, M is a lanthanoid element and R¹⁴ is a hydrocarbon group of 1 to 20 carbon atoms (preferably saturated or unsaturated, and straight-chained, branched-chained or cyclic)]. Incidentally, the alkoxy group bonds to a primary, secondary or tertiary carbon atom. As specific examples of the alkoxy group, there can be mentioned 2-ethyl-hexylalkoxy group, oleylalkoxy group, stearylalkoxy group, phenoxy group, benzylalkoxy group, and the like. Of these, 2-ethyl-hexylalkoxy group and benzylalkoxy group are preferred.

As specific examples of the *β*-diketone complex portion of the *β*-diketone complex of lanthanoid element, there can be mentioned acetylacetone complex, benzoylacetone complex, propionitrileacetone complex, valerylacetone complex, ethylacetylacetone complex, and the like. Of these, acetylacetone complex and ethylacetylacetone complex are preferred.

As specific examples of the phosphate portion of the phosphate of lanthanoid element and the phosphite portion of the phosphite of lanthanoid element, there can be mentioned salts of bis(2-ethylhexyl) phosphate, bis(1-methylheptyl) phosphate, bis(p-nonylphenyl) phosphate, bis(polyethylene glycol-p-nonylphenyl) phosphate, (1-methylheptyl) (2-ethylhexyl) phosphate, (2-ethylhexyl) (p-nonylphenyl) phosphate, 2-ethylhexyl phosphonic acid mono-2-ethylhexyl, 2-ethylhexyl phosphonic acid mono-p-nonylphenyl, bis(2-ethylhexyl) phosphinic acid, bis(1-methylheptyl) phosphinic acid, bis(p-nonylphenyl) phosphinic acid, (1-methylheptyl) (2-ethylhexyl) phosphinic acid, (2-ethylhexyl) (p-nonylphenyl) phosphinic acid, and the like. Of these, salts of bis(2-ethylhexyl) phosphate, bis(1-methylheptyl) phosphate, 2-ethylhexyl phosphonic aicd mono-2-ethylhexyl or bis(2-ethylhexyl) phosphinic acid are preferred.

Of the above examples, as lanthanoid element-containing compounds, phosphate of neodymium or carboxylate of neodymium is more preferred, and particularly preferred is carboxylate such as 2-ethylhexanoate of neodymium, Versatic Acid salt of neodymium, or the like.

In order to dissolve the lanthanoid element-containing compound in a solvent or store the compound stable for a long period, it is preferred to mix the lanthanoid element-containing compound with a Lewis base, or to react the lanthanoid element-containing compound with a Lewis base to form a reaction product. The use amount of the Lewis base is preferably 30 mol or smaller, more preferably 1 to 10 mol per 1 mol of the lanthanoid element. As specific examples of the Lewis base, there can be mentioned acetylacetone, tetrahydrofuran, pyridine, N,N-dimethylformamide, thiophene, diphenyl ether, triethylamine, organic phosphorus compound, monovalent or bivalent alcohol, and the like. Incidentally, the above-mentioned components (e) may be used individually or in combination of two or more kinds.

The component (f) is an alumoxane and/or an organic aluminum compound represented by the general formula (7) AlR¹²R¹³R¹⁴ [wherein, R¹² and R¹³ are each independently a hydrogen atom or a hydrocarbon group of 1 to 10 carbon atoms and R¹⁴ is a hydrocarbon group of 1 to 10 carbon atoms].

The alumoxane (referred to also as aluminoxane) is a compound having a structure represented by the following general formula (8) or (9). The alumoxane may also be an combination of alumoxanes, disclosed in Fine Chemical 23, (9), 5 (1994), J. Am. Chem. Soc., 115, 4971 (1993), and J. Am. Chem. Soc., 117, 6465 (1995).

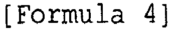

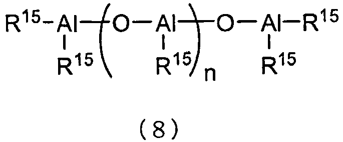

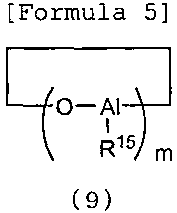

In the general formulas (8) and (9), R¹⁵ is a hydrocarbon group of 1 to 20 carbon atoms. Additionally, n in the general formula (8) and m in the general formula (9) are each an integer of 2 or larger. As specific examples of the hydrocarbon group of 1 to 20 carbon atoms represented with R¹⁵ in the general formulas (8) and (9), there can be mentioned methyl group, ethyl group, propyl group, butyl group, isobutyl group, tert-butyl group, hexyl group, isohexyl group, octyl group, isooctyl group, and the like. Of these, methyl group, ethyl group, isobutyl group and tert-butyl group are preferred, and methyl group is more preferred. Additionally, n in the general formula (8) and m in the general formula (9) are each preferably an integer of 4 to 100.

As specific examples of the alumoxane, there can be mentioned methyl alumoxane (MAO), ethyl alumoxane, n-propyl alumoxane, n-butyl alumoxane, isobutyl alumoxane, tert-butyl alumoxane, hexyl alumoxane, isohexyl alumoxane, and the like. The alumoxane can be prepared by a known conventional method. It can be prepared, for example, by adding trialkyl aluminum or dialkyl aluminum monochloride into an organic solvent such as benzene, toluene, xylene or the like, further adding water, steam, steam-containing nitrogen gas, or a salt having water of crystallization, such as copper sulfate pentahydrate, aluminum sulfate hexadecahydrate or the like, and giving rise to a reaction. These alumoxanes may be used individually or in combination of two or more kinds.

As specific examples of the organic aluminum compound represented by the general formula (7), there can be mentioned trimethyl aluminum, triethyl aluminum, tri-n-propyl aluminum, triisopropyl aluminum, tri-n-butyl aluminum, triisobutyl aluminum, tri-tert-butyl aluminum, tripentyl aluminum, trihexyl aluminum, tricyclohexyl aluminum, trioctyl aluminum, hydrogenated diethyl aluminum, hydrogenated di-n-propyl aluminum, hydrogenated di-n-butyl aluminum, hydrogenated diisobutyl aluminum, hydrogenated dihexyl aluminum, hydrogenated diisohexyl aluminum, hydrogenated dioctyl aluminum, hydrogenated diisooctyl aluminum, ethyl aluminum dihydride, n-propyl aluminum dihydride, isobutyl aluminum dihydride, and the like. Of these, preferred are triethyl aluminum, triisobutyl aluminum, hydrogenated diethyl aluminum, hydrogenated diisobutyl aluminum, or the like. These organic aluminum compounds may be used individually or in combination of two or more kinds.

The component (g) is a halogen-containing compound containing at least one halogen atom in the molecular structure. As specific examples of the component (g), there can be mentioned a reaction product between metal halide and Lewis base, diethyl aluminum chloride, silicon tetrachloride, trimethylchlorosilane, methyldichlorosilane, dimethyldichlorosilane, methyltrichlorosilane, ethyl aluminum dichloride, ethyl aluminum sesquichloride, tin tetrachloride, tin trichloride, phosphorus trichloride, benzoyl chloride, tert-butyl chloride, trimethylsilyl iodide, triethylsilyl iodide, dimethylsilyl diiodide, diethyl aluminum iodide, methyl iodide, butyl iodide, hexyl iodide, octyl iodide, iodoform, diiodomethane, iodine, benzylideneiodide, and the like.

As specific examples of the metal halide, there can be mentioned beryllium chloride, beryllium bromide, beryllium iodide, magnesium chloride, magnesium bromide, magnesium iodide, calcium chloride, calcium bromide, calcium iodide, barium chloride, barium bromide, barium iodide, zinc chloride, zinc bromide, zinc iodide, cadmium chloride, cadmium bromide, cadmium iodide, mercury chloride, mercury bromide, mercury iodide, manganese chloride, manganese bromide, manganese iodide, rhenium chloride, rhenium bromide, rhenium iodide, copper chloride, copper iodide, silver chloride, silver bromide, silver iodide, gold chloride, gold bromide, gold iodide, and the like. Of these, preferred are magnesium chloride, calcium chloride, barium chloride, manganese chloride, zinc chloride, copper chloride, magnesium iodide, calcium iodide, barium iodide, manganese iodide, zinc iodide and copper iodide, and more preferred are magnesium chloride, manganese chloride, zinc chloride, copper chloride, magnesium iodide, manganese iodide, zinc iodide, and copper iodide.

As specific examples of the Lewis base used for production of the reaction product between metal halide and Lewis base, there can be mentioned phosphorus compounds, carbonyl compounds, nitrogen compounds, ether compounds, alcohols, and the like. More specifically, there can be mentioned tributyl phosphate, tri-2-ethylhexyl phosphate, triphenyl phosphate, tricresyl phosphate, triethylphosphine, tributylphosphine, triphenylphosphine, diethylphosphinoethane, diphenylphosphinoethane, acetylacetone, benzoylacetone, propionitrileacetone, valerylacetone, ethylacetylacetone, methyl acetoacetate, ethyl acetoacetate, phenyl acetoacetate, dimethyl malonate, diethyl malonate, diphenyl malonate, acetic acid, octanoic acid, 2-ethylhexanoic acid, oleic acid, stearic acid, benzoic acid, naphthenic acid, "Versatic Acid" (trade name, a product of Shell Chemical) (a carboxylic acid in which carboxyl group bonds to tertiary carbon atom), triethylamine, N,N-dimethylacetamide, tetrahydrofuran, diphenyl ether, 2-ethylhexyl alcohol, oleyl alcohol, stearyl alcohol, phenol, benzyl alcohol, 1-decanol, lauryl alcohol, and the like. Of these, preferred are tri-2-ethylhexyl phosphate, tricresyl phosphate, acetylacetone, 2-ethylhexanoic acid, Versatic Acid, 2-ethylhexyl alcohol, 1-decanol, lauryl alcohol, and the like.

The amount of the Lewis base used for production of the reaction product between metal halide and Lewis base is preferably 0.01 to 30 mol, more preferably 0.05 to 10 mol per 1 mol of the metal halide. The polymerization reaction using a polymerization catalyst containing, as a main component, the reaction product between metal halide and Lewis base is preferred because the metal amount remaining in the conjugated diene polymer obtained can be reduced.

The use amounts of each component (components (e) to (g)) which are main components of the polymerization catalyst, can be set appropriately so as necessary. The use amount of the component (e) is preferably 0.00001 to 1.0 mmol, more preferably 0.0001 to 0.5 mmol relative to 100 g of the conjugated diene compound. When the use amount of the component (e) is smaller than 0.00001 mmol, the activity of polymerization tends to be low. Meanwhile, when the use amount exceeds 1.0 mmol, the concentration of catalyst is high, which may require a deminelarizing step.

When the component (f) is an alumoxane, the preferred amount of the alumoxane contained in the polymerization catalyst can be shown by the molar ratio of the component (e) and the aluminum (Al) contained in the alumoxane. That is, (the component (e)) : (the aluminum (Al) contained in alumoxane) (molar ratio) is preferably 1:1 to 1:500, more preferably 1:3 to 1:250, particularly preferably 1:5 to 1:200. When the molar ratio is outside these ranges, the activity of catalyst tends to be low, or a step for removal of catalyst residue may be required.

Additionally, when the component (f) is an organic aluminum compound, the preferred amount of the organic aluminum compound contained in the polymerization catalyst can be shown by the molar ratio of the component (e) and the organic aluminum compound. That is, (the component (e)) : (the organic aluminum compound) (molar ratio) is preferably 1:1 to 1:700, more preferably 1:3 to 1:500. When the molar ratio is outside these ranges, the activity of catalyst tends to be low, or a step for removal of catalyst residue may be required.

The preferred amount of the component (g) in the polymerization catalyst can be shown by the molar ratio of the halogen atom contained in the component (g) and the component (e). That is, (the halogen atom)/(the component (e)) (molar ratio) is preferably 0.1 to 20, more preferably 0.2 to 15, particularly preferably 0.5 to 8.

The polymerization catalyst may contain, besides the components (e) to (g), at least either (hereinafter referred to also as "co-catalyst") of a conjugated diene compound and a non-conjugated diene compound, in order to improve catalyst activity. The use amount of the co-catalyst is preferably 1,000 mol or smaller, more preferably 0.5 to 750 mol, particularly preferably 1 to 500 mol relative to 1 mol of the component (e). As specific examples of the conjugated diene compound, there can be mentioned the same monomers as used for polymerization, such as 1,3-butadiene, isoprene and the like. Additionally, as specific examples of the non-conjugated diene compound, there can be mentioned divinylbenzene, diisopropenylbenzene, triisopropenylbenzene, 1,4-vinylhexadiene, ethylidenenorbornene, and the like.

The polymerization catalyst can be prepared, for example, by reacting the components (e) to (g) dissolved in a solvent and further the co-catalyst added as necessary. Incidentally, the addition order of the individual components may be arbitrary. However, it is preferred that each components are beforehand mixed and reacted and further aged, in view of higher polymerization activity and shortening of induction period at polymerization initiation. The aging temperature is preferably 0 to 100°C, more preferably 20 to 80°C. When the aging temperature is lower than 0°C, the aging tends to be insufficient. Meanwhile, when the aging temperature exceeds 100°C, the catalyst activity tends to be low and the molecular weight distribution of the conjugated diene polymer obtained tends to be wider. Incidentally, there is no particular restriction as to the aging time, and an aging time of at least 0.5 minute is sufficient. Each components may be contacted with each other in a line, before their addition into a polymerization vessel. Additionally, the catalyst prepared is stable for several days. By using such a catalyst, there can be prepared a conjugated diene polymer which has a cis-1,4 bond content of 80 % or more and which has active terminals.

The molecular weight distribution (weight-average molecular weight (Mw)/number-average molecular weight (Mn)) of the conjugated diene polymer is preferably 6 or less, more preferably 5.5 or less, particularly preferably 5 or less. Incidentally, the molecular weight distribution of the conjugated diene polymer can be easily controlled, for example, by controlling the molar ratio of the main components (components (e) to (g)) of the polymerization catalyst.

Additionally, the Mooney viscosity (ML₁₊₄, 100°C) at 100°C of the conjugated diene polymer is preferably 10 to 150, more preferably 15 to 130, particularly preferably 20 to 120. When the Mooney viscosity is lower than 10, the obtained vulcanaized rubber may be low in breaking strength, abrasion resistance, and the like. Meanwhile, when the Mooney viscosity is higher than 150, the polymer (a2) obtained may have low processability in kneading. Incidentally, the Mooney viscosity can be easily controlled, for example, by controlling the molar ratio of the main components (components (e) to (g)) of the polymerization catalyst.

### (Alkoxysilane compound)

The alkoxysilane compound used for primary modification of the active terminals of the conjugated diene polymer is preferably at least one member selected from the group consisting of a compound represented by the following general formula (1), a compound represented by the following general formula (2), a compound represented by the following general formula (3), and partial condensates of these compounds. Incidentally, the "partial condensates" mentioned-herein refer to condensates wherein a part (not all) of the Si-OR bonds of the compounds represented by the general formula (1) to (3) has changed into Si-O-Si bonds by condensation.

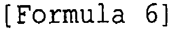

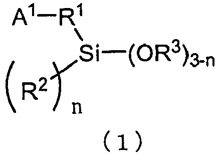

In the general formula (1), A¹ is a monovalent group having at least one functional group selected from the group consisting of (thio)epoxy group, (thio)isocyanate group, (thio)ketone group, (thio)aldehyde group, imino group, cyano group, amide group, isocyanuric acid trihydrocarbyl ester group, (thio)carboxylic acid ester group, metal salt of (thio)carboxylic acid, carboxylic acid anhydride, carboxylic acid halide, and carbonic acid dihydrocarbyl ester group; R¹ is a single bond or a bivalent inactive hydrocarbon group; R² and R³ are each independently a monovalent aliphatic hydrocarbon group of 1 to 20 carbon atoms or a monovalent aromatic hydrocarbon group of 6 to 18 carbon atoms; and n is an integer of 0 to 2. When there is a plurality of R²s, the R²s may be the same or different from each other. Additionally, when there is a plurality of OR³s, the OR³s may be the same or different from each other. Incidentally, the compound represented by the general formula (1) contains, in the molecule, neither active proton nor onium salt.

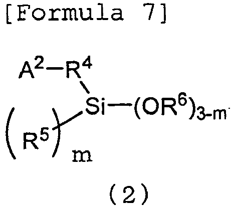

In the general formula (2), A² is a monovalent group having at least one functional group selected from the group consisting of cyclic or acyclic tertiary amino group, pyridyl group, sulfide group, and multi-sulfide group; R⁴ is a single bond or a bivalent inactive hydrocarbon group; R⁵ and R⁶ are each independently a monovalent aliphatic hydrocarbon group of 1 to 20 carbon atoms or a monovalent aromatic hydrocarbon group of 6 to 18 carbon atoms; and m is an integer of 0 to 2. When there is a plurality of R⁵s, the R⁵s may be the same or different from each other. Additionally, when there is a plurality of OR⁶s, the OR⁶s may be the same or different from each other. Incidentally, the compound represented by the general formula (2) contains, in the molecule, neither active proton nor onium salt.

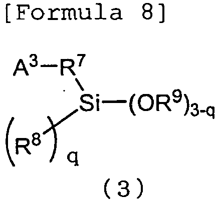

In the general formula (3), A³ is a monovalent group having at least one functional group selected from the group consisting of hydroxyl group, thiol group, primary amino group, onium salt of primary amine, cyclic or acyclic secondary amino group, onium salt of cyclic or acyclic secondary amine, onium salt of cyclic or acyclic tertiary amine, group having aryl Sn bond or arylalkyl Sn bond, sulfonyl group, and sulfinyl group; R⁷ is a single bond or a bivalent inactive hydrocarbon group; R⁸ and R⁹ are each independently a monovalent aliphatic hydrocarbon group of 1 to 20 carbon atoms or a monovalent aromatic hydrocarbon group of 6 to 18 carbon atoms; and q is an integer of 0 to 2. Additionally, when there is a plurality of R⁸s, the R⁸s may be the same or different from each other. When there is a plurality of OR⁹s, the OR⁹s may be the same or different from each other.

In the general formula (1), the imino group as a functional group represented by A¹ includes ketimine, aldimine and amidine. Additionally, the (thio)carboxylic acid ester group includes unsaturated carboxylic acid ester groups such as acrylate, methacrylate and the like. Incidentally, as specific examples of the metal constituting the metal salt of (thio)carboxylic acid, there can be mentioned metals, alkaline earth metals, Al, Sn, Zn, and the like.

As specific examples of the bivalent inactive hydrocarbon group as a group represented by R¹ in the general formula (1), an alkylene group of 1 to 20 carbon atoms can be mentioned. This alkylene group may be either of straight chain, branched chain and cyclic, but straight chain is preferred. As specific examples of the straight chain alkylene group, there can be mentioned methylene group, ethylene group, trimethylene group, tetramethylene group, pentamethylene group, hexamethylene group, octamethylene group, decamethylene group, dodecamethylene group, and the like.

As specific examples of the monovalent aliphatic hydrocarbon group of 1 to 20 carbon atoms as a group represented by R² or R³ in the general formula (1), there can be mentioned an alkyl group of 1 to 20 carbon atoms, an alkenyl group of 2 to 18 carbon atoms, and the like. More specifically, there can be mentioned methyl group, ethyl group, n-propyl group, isopropyl group, n-butyl group, isobutyl group, sec-butyl group, tert-butyl group, pentyl group, hexyl group, octyl group, decyl group, dodecyl group, cyclopentyl group, cyclohexyl group, vinyl group, propenyl group, allyl group, hexenyl group, octenyl group, cyclopentenyl group, cyclohexenyl group, and the like.

As specific examples of the monovalent aromatic hydrocarbon group of 6 to 18 carbon atoms as a group represented by R² or R³ in the general formula (1), there can be mentioned an aryl group of 6 to 18 carbon atoms, an aralkyl group of 7 to 18 carbon atoms, and the like. More specifically, there can be mentioned phenyl group, tolyl group, xylyl group, naphthyl group, benzyl group, phenethyl group, naphthylmethyl group, and the like. Incidentally, the aromatic ring of the aromatic hydrocarbon group may have a substituent such as lower alkyl group or the like.

As specific examples of the compound represented by the general formula (1), there can be mentioned 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyl(methyl)dimethoxysilane, and (thio)epoxy group-containing alkoxysilane compounds formed by substitution of the epoxy group in the above-mentioned compounds with thioepoxy group;

Imino group-containing alkoxysilane compounds such as N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine, and trimethoxysilyl compound, methyldiethoxysilyl compound, ethyldiethoxysilyl compound, methyldimethoxysilyl compound, ethyldimethoxysilyl compound, and the like corresponding to the above triethoxysilyl compounds;

Cyano group-containing alkoxysilane compounds such as 3-cyanopropyltrimethoxysilane, 3-cyanopropyltriethoxysilane, 3-cyanoethyltrimethoxysilane, 3-cyanoethyltriethoxysilane and the like;

Carboxylic acid ester-containing compounds such as 3-methacryloyloxypropyltriethoxysilane, 3-methacryloyloxypropyltrimethoxysilane, 3-methacryloyloxypropylmethyldiethoxysilane, 3-methacryloyloxypropyltriisopropoxysilane and the like; isocyanate group-containing compounds such as 3-isocyanatopropyltrimethoxysilane, 3-isocyanatopropyltriethoxysilane, 3-isocyanatopropylmethyldiethoxysilane, 3-isocyanatopropyltriisopropoxysilane and the like; and carboxylic acid anhydride-containing compounds such as 3-triethoxysilylpropylsuccinic acid anhydride, 3-trimethoxysilylpropylsuccinic acid anhydride, 3-methyldiethoxysilylpropylsuccinic acid anhydride and the like. These compounds may be used individually or in combination of two or more kinds.

In the general formula (2), the acyclic tertiary amino group as a functional group represented by A², includes N,N-(di-substituted) aromatic amines such as N,N-(di-substituted) aniline and the like. Additionally, the cyclic tertiary amino group may contain (thio)ether as a part of the ring.

As preferred example of the bivalent inactive hydrocarbon group as a group represented by R⁴ in the general formula (2), an alkylene group of 1 to 20 carbon atoms can be mentioned. This alkylene group may be either of straight chain, branched chain and cyclic, but is preferably straight chain. As specific examples of the straight chain alkylene group, there can be mentioned methylene group, ethylene group, trimethylene group, tetramethylene group, pentamethylene group, hexamethylene group, octamethylene group, decamethylene group, dodecamethylene group, and the like.

As specific examples of the monovalent aliphatic hydrocarbon group of 1 to 20 carbon atoms as a group represented by R⁵ or R⁶ in the general formula (2), there can be mentioned an alkyl group of 1 to 20 carbon atoms, an alkenyl group of 2 to 18 carbon atoms, and the like. More specifically, there can be mentioned methyl group, ethyl group, n-propyl group, isopropyl group, n-butyl group, isobutyl group, sec-butyl group, tert-butyl group, pentyl group, hexyl group, octyl group, decyl group, dodecyl group, cyclopentyl group, cyclohexyl group, vinyl group, propenyl group, allyl group, hexenyl group, octenyl group, cyclopentenyl group, cyclohexenyl group, and the like.

As specific examples of the monovalent aromatic hydrocarbon group of 6 to 18 carbon atoms as a group represented by R⁵ or R⁶ in the general formula (2), there can be mentioned an aryl group of 6 to 18 carbon atoms, an aralkyl group of 7 to 18 carbon atoms, and the like. More specifically, there can be mentioned phenyl group, tolyl group, xylyl group, naphthyl group, benzyl group, phenethyl group, naphthylmethyl group, and the like. The aromatic ring of the aromatic hydrocarbon group may have a substituent such as lower alkyl group or the like.

As specific examples of the compound represented by the general formula (2), there can be mentioned acyclic tertiary amino group-containing alkoxysilane compounds such as 3-dimethylaminopropyl(triethoxy)silane, 3-dimethylaminopropyl(trimethoxy)silane, 3-diethylaminopropyl(triethoxy)silane, 3-diethylaminopropyl (trimethoxy)silane, 2-dimethylaminoethyl(triethoxy)silane, 2-dimethylaminoethyl(trimethoxy)silane, 3-dimethylaminopropyl(diethoxy)methylsilane, 3-dibutylaminopropyl(triethoxy)silane and the like;

Cyclic tertiary amino group-containing alkoxysilane compounds such as 3-(1-hexamethyleneimino)propyl(triethoxy)silane, 3-(1-hexamethyleneimino)propyl(trimethoxy)silane, (1-hexamethyleneimino)methyl(trimethoxy)silane, (1-hexamethyleneimino)methyl(triethoxy)silane, 2-(1-hexamethyleneimino)ethyl(triethoxy)silane, 2-(1-hexamethyleneimino)ethyl(trimethoxy)silane, 3-(1-pyrrolidinyl)propyl(triethoxy)silane, 3-(1-pyrrolidinyl)propyl(trimethoxy)silane, 3-(1-heptamethyleneimino)propyl(triethoxy)silane, 3-(1-dodecamethyleneimino)propyl(triethoxy)silane, 3-(1-hexamethyleneimino)propyl(diethoxy)methylsilane, 3-(1-hexamethyleneimino)propyl(diethoxy)ethylsilane and the like;

And other hydrocarbyloxysilane compounds such as 2-(trimethoxysilylethyl)pyridine, 2-(triethoxysilylethyl)pyridine, 4-(trimethoxysilylethyl)pyridine, 4-(triethoxysilylethyl)pyridine and the like. These compounds may be used individually or in combination of two or more kinds.

In the general formula (3), the primary amino group as a functional group represented by A³, includes an aromatic amine such as aniline or the like. Additionally, the acyclic secondary amino group includes an N-(mono-substituted) aromatic amine such as N-(mono-substituted) aniline or the like. Moreover, the onium salt of acyclic tertiary amine includes an onium salt of N,N-(di-substituted) aromatic amine such as N,N-(di-substituted) aniline or the like. Incidentally, the cyclic secondary amine or the cyclic tertiary amine may contain (thio)ether as a part of the ring.

As preferred examples of the bi-valent inactive hydrocarbon group as a group represented by R⁷ in the general formula (3), an alkylene group of 1 to 20 carbon atoms can be mentioned. This alkylene group may be either of straight chain, branched chain and cyclic, but is preferably straight chain. As specific examples of the straight chain alkylene group, there can be mentioned methylene group, ethylene group, trimethylene group, tetramethylene group, pentamethylene group, hexamethyene group, octamethylene group, decamethylene group, dodecamethylene group, and the like.

As specific examples of the monovalent aliphatic hydrocarbon group of 1 to 20 carbon atoms as a group represented by R⁸ or R⁹ in the general formula (3), there can be mentioned an alkyl group of 1 to 20 carbon atoms, an alkenyl group of 2 to 18 carbon atoms, and the like. More specifically, there can be mentioned methyl group, ethyl group, n-propyl group, isopropyl group, n-butyl group, isobutyl group, sec-butyl group, tert-butyl group, pentyl group, hexyl group, octyl group, decyl group, dodecyl group, cyclopentyl group, cyclohexyl group, vinyl group, propenyl group, allyl group, hexenyl group, octenyl group, cyclopentenyl group, cyclohexenyl group, and the like.

As specific examples of the monovalent aromatic hydrocarbon group of 6 to 18 carbon atoms as a group represented by R⁸ or R⁹ in the general formula (3), there can be mentioned an aryl group of 6 to 18 carbon atoms, an aralkyl group of 7 to 18 carbon atoms, and the like. More specifically, there can be mentioned phenyl group, tolyl group, xylyl group, naphthyl group, benzyl group, phenethyl group, naphthylmethyl group, and the like. Incidentally, the aromatic ring of the aromatic hydrocarbon group may have s substituent group such as lower alkyl group or the like.

As specific examples of the compound represented by the general formula (3), there can be mentioned 3-aminopropyltrimethoxysilane, 3-aminopropyltriethoxysilane, hydroxymethyltrimethoxysilane, hydroxymehtyltriethoxysilane, mercaptomethyltrimethoxysilane, mercaptomethyltriethoxysilane, aminophenyltrimethoxysilane, aminophenyltriethoxysilane, 3-(N-methylamino)propyltrimethoxysilane, 3-(N-methylamino)propyltriethoxysilane, octadecyldimethyl(3-trimethylsilylpropyl)ammonium chloride, octadecyldimethyl(3-triethylsilylpropyl)ammonium chloride, sulfonylmethyltrimethoxysilane, sulfonylmethyltriethoxysilane, sulfinylmethyltrimethoxysilane, sulfinylmethyltriethoxysilane, and the like.

Of the above-mentioned alkoxysilane compounds, the compounds represented by the general formula (1) are preferred, and more preferred are 3-glycidoxypropyltrimethoxysilane and 3-glycidoxypropyltriethoxysilane.

The primary modification (modification reaction) may be carried out by any of a solution reaction and a solid-phase reaction, but a solution reaction is preferred. In the solution reaction, the solvent used in the polymerization reaction may be used per se and it is not necessary to remove the unreacted monomer(s). As to the style of the reaction, there is no particular restriction; a batch type reactor, or an apparatus such as a multi-stage continuous reactor, an in-line mixer, and the like may be used. Incidentally, it is important that the primary modification is conducted without operation such as solvent removal, water treatment, heat treatment, isolation of conjugated diene polymer or the like after the polymerization reaction.

The reaction temperature of the primary modification is preferably 20 to 100°C. When the reaction temperature is lower than 20°C, the Mooney viscosity of the polymer (a2) obtained tends to be high. Meanwhile, when the reaction temperature is higher than 100°C, the active terminals of the conjugated diene polymer tends to be easily deactivated.

The polymer (a2) is preferably prepared by subjecting the active terminals of the conjugated diene polymer to primary modification with an alkoxysilane compound and then to secondary modification in the presence of a condensation accelerator.

### (Condensation accelerator)

The condensation accelerator preferably comprises at least one compound selected from the group consisting of a carboxylate of 3 to 20 carbon atoms, with tin of oxidation number 2, represented by the following general formula (10), a compound of tin of oxidation number 4, represented by the following general formula (11), and a compound of titanium of oxidation number 4, represented by the following general formula (12), and water.

Sn(OCOR¹⁷)₂ (10)

R¹⁸ ᵣSnA⁴ₜB¹₍₄₋ₜ₋ᵣ₎ (11)

A⁵ₓTiB²₍₄₋ₓ₎ (12)

In the general formula (10), R¹⁷ s are each independently an organic group of 2 to 19 carbon atoms. Additionally, in the general formula (11), A⁴ is a siloxy group substituted with total of three substituents (which may be the same or different from each other) selected from the group consisting of an aliphatic carboxylic acid residue of 2 to 30 carbon atoms, a 1,3-dicarbonyl-containing group of 5 to 30 carbon atoms, a hydrocarbyloxy group of 1 to 30 carbon atoms, and a hydrocarbyl group of 1 to 20 carbon atoms; B¹ is a hydroxyl group or a halogen atom; R¹⁸ is an aliphatic hydrocarbon group of 1 to 30 carbon atoms; r is an integer of 1 to 3; t is an integer of 1 or 2; and t+r = 3 or 4. When there is a plurality of A⁴s, the A⁴s may be the same or different from each other. When there is a plurality of R¹⁸s, the R¹⁸s may be the same or different from each other.

In the general formula (12), A⁵ is a siloxy group substituted with total of three substituents selected from the group consisting of a hydrocarbyloxy group of 1 to 30 carbon atoms and an alkyl group of 1 to 30 carbon atoms; B² is a 1,3-dicarbonyl-containing group of 5 to 30 carbon atoms; and x is an integer of 2 or 4. When there is a plurality of A⁵s, the A⁵s may be the same or different from each other. When there is a plurality of B²s, the B²s may be the same or different from each other.

As specific examples of the compounds represented by the general formulas (10) and (11), there can be mentioned tin dicarboxylate (preferably, a carboxylate of 8 to 20 carbon atoms), dihydrocarbyl tin dicarboxylate, dihydrocarbyl tin bis(α, γ-diketonate), dihydrocarbyl tin alkoxy halide, dihydrocarbyl tin monocarboxylate hydroxide, dihydrocarbyl tin alkoxy (trihydrocarbylsiloxide), dihydrocarbyl tin alkoxy (dihydrocarbylalkoxysiloxide), dihydrocarbyl tin bis(trihydrocarbylsiloxide), dihydrocarbyl tin bis(dihydrocarbylalkoxysiloxide), and the like.

Additionally, as specific examples of the compound represented by the general formula (12), there can be mentioned titanium tetra-alkoxide, titanium dialkoxy bis(α, γ-diketonate), titanium tetrakis(trihydrocarbyloxysiloxide), and the like.

As water contained in the condensation accelerator, water per se, or a mixed solvent water and alcohol can be used. Additionally, a dispersion micelle in hydrocarbon solvent, water adsorbed on solid surface, hydrous water of hydrate, or the like can also be used.

The amount of the water contained in the condensation accelerator is preferably 0.1 mol or larger, more preferably 0.5 to 3 mol in terms of metal, relative to the total amount of the alkoxysilane compound present in the reaction system. Incidentally, the water amount is preferably 0.5 to 20 mol relative to the metal amount contained in the condensation accelerator.

The use amount of the condensation accelerator is preferably 0.1 mol or larger in terms of metal, relative to the total amount of the alkoxysilane compound present in the reaction system.

### (Secondary modification)

The secondary modification is conducted in the presence of a condensation accelerator using, for example, an alkoxysilane compound. As specific examples of the alkoxysilane compound used therein, there can be mentioned the same compounds as previously raised for "alkoxysilane compound". Incidentally, the alkoxysilane compound used in the primary modification may be different from the alkoxysilane compound used in the secondary modification, however it is preferable that the two compounds are the same.

### (Other diene rubber)

The diene rubber contained in the rubber component (A) may contain "other diene rubber" besides the copolymer (a1) and the polymer (a2). As specific examples of the "other diene rubber", there can be mentioned natural rubber, polyisoprene rubber, high cis-1,4 bond polybutadiene rubber, and the like. Incidentally, the content of the "other diene rubber" when contained in the diene rubber is preferably 75 mass % or less, more preferably 50 mass % or less, particularly preferably 40 mass % or less relative to the total of the diene rubber.

### (Filler (B))

The filler (B) contains at least either of carbon black (b1) and silica (b2). The filler (B) is effective for improvement in failure characteristics such as tensile strength, abrasion resistance, rolling resistance, and the like. of vulcanized rubber and for good processability of rubber composition.

### (Carbon black (b1))

The carbon black (b1) is very effective for improvement in failure characteristics such as tensile strength, and the like of vulcanized rubber. Though there is no particular restriction , specific examples of the carbon black (b1) include SRF, GPF, FEF, ISAF, SAF, and the like. Of these, preferred is a carbon black having an iodine adsorption of 60 mg or more and a dibutyl phthalate absorption of 80 ml/100g, and from the standpoint of improvement in the abrasion resistance of the obtained vulcanaized rubber from the standpoint of improvement in the abrasion resistance of the obtained vulcanaized rubber more preferred is HAF, ISAF and SAF.

In the case the carbon black (b1) is contained in the filler (B), the content of the carbon black (b1) is 2 to 100 mass parts, preferably 2 to 90 mass parts, more preferably 2 to 75 mass parts relative to 100 mass parts of the rubber component (A). When the content of the carbon black (b1) is less than 2 mass parts relative to 100 mass parts of the rubber component (A), the improvement effect in the tensile strength of the obtained vulcanaized rubber may not be sufficient. Meanwhile, when the content is more than 100 mass parts, the processability of the rubber composition obtained may be low.

### (Silica (b2))

There is no particular restriction as to the silica (b2), but specific examples of the silica (b2) include wet silica, dry silica, calcium silicate aluminum silicate, and the like. Of these, wet silica is preferred from the viewpoint of improvement in breaking strength such as tensile strength, wet skid resistance and rolling resistance of the obtained vulcanized rubber.

In the case the carbon black (b1) is contained in the filler (B), the content of the silica (b2) is 30 to 100 mass parts, preferably 30 to 90 mass parts, more preferably 30 to 80 mass parts relative to 100 mass parts of the rubber component (A). When the content of the silica (b2) is less than 30 mass parts relative to 100 mass parts of the rubber component (A), the improvement in the rolling resistance of the obtained vulcanaized rubber may not be sufficient. Meanwhile, when the content is more than 100 mass parts, the processability of the rubber composition obtained may be low.

Incidentally, when the filler (B) contains silica (b2), the filler (B) is preferred to further contain a silane coupling agent. When a silane coupling agent is contained in the filler (B), the reinforcement effect by silica (b2) can be improved further.

As specific examples of the silane coupling agent, there can be mentioned bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazolyl tetrasulfide, and the like. Of these, bis(3-triethoxysilylpropyl) polysulfide and 3-trimethoxysilylpropylbenzothiazolyl tetrasulfide are preferred for their high reinforcement effect. These silane coupling agents may be used individually or in combination of two or more kinds.

The content of the silane coupling agent in the filler (B) is preferably 2 to 20 mass parts, more preferably 3 to 15 mass parts relative to 100 mass parts of the silica (b2). When the content of the silane coupling agent is less than 2 mass parts relative to 100 mass parts of the silica (b2), the reinforcement effect by the silane coupling agent may be insufficient. Meanwhile, when the content is more than 20 mass parts, the rubber composition may turn into a gel.

### (Inorganic filler (b3))

The filler (B) may contain an inorganic filler (b3) besides carbon black (b1) and silica (b2). As specific examples of the inorganic filler (b3), there can be mentioned aluminum hydroxide, magnesium hydroxide, magnesium oxide, talc, attapulgite, titanium white, titanium black, calcium oxide, calcium hydroxide, aluminum magnesium oxide, clay, kaolin, pyrophyllite, bentonite, aluminum silicate, magnesium silicate, aluminum calcium silicate, magnesium calcium silicate, mica, and the like. Incidentally, these inorganic fillers (b3) may be used individually or in combination of two or more kinds.

### (Other rubber)

The rubber composition of the present invention may contain "other rubber" besides the rubber component (A) as long as the properties of the rubber composition are not impaired. As specific examples of the "other rubber", there can be mentioned ethylene-propylene rubber, silicone rubber, vinylidene fluoride rubber, and the like. Incidentally, the content of the "other rubber" when contained in the rubber composition of the present invention is preferably 0 to 30 mass %, more preferably 0 to 25 mass %, particularly preferably 0 to 20 mass % relative to the total of the rubber component (A).

### (Other component)

The rubber composition of the present invention may contain other component besides the rubber component (A) and the filler (B), as long as the properties of the rubber composition are not impaired. As specific examples of the other component, there can be mentioned vulcanizing agent, vulcanization accelerator, process oil, anti-aging agent, anti-scorching agent, zinc oxide, stearic acid, processing aid such as wax, tackifier, and the like.

As specific examples of the vulcanizing agent, there can be mentioned sulfur; peroxides such as di-tert-butyl peroxide and the like; and sulfur-donating substances such as tetramethylthiuram disulfide and the like. Of these, sulfur is preferred because it gives durability to the obtained vulcanized rubber. The use amount of the vulcanizing agent is preferably 0.5 to 5 mass parts relative to 100 mass parts of the rubber component (A).

As specific examples of the vulcanization accelerator, there can be mentioned diphenylguanidine, N-tetra-butyl-2-benzothiazolesulfenamide, N-cyclohexyl-2-benzothiazolsulfenamide, and the like. The use amount of the vulcanization accelerator is preferably 1 to 5 mass parts relative to 100 mass parts of the rubber component (A).

As specific examples of the anti-oxidant, there can be mentioned N-phenyl-N'-isopropyl-p-phenylenediamine, N-(1,3-dimethylbutyl)-N'-phenyl-p-phenylenediamine, and the like. The use amount of the anti-oxidant is preferably 1 to 10 mass parts relative to 100 mass parts of the rubber component (A).

### (Rubber composition)

The rubber composition of the present invention can prepare a vulcanized rubber which is suitable for producing, for example, a pneumatic tire excellent in abrasion resistance, breaking strength, rolling resistance, wet skid resistance, and the like. Therefore, the rubber composition of the present invention is suitable as a material for producing a vulcanized rubber for tire tread. Incidentally, the present rubber composition is also suitable as a material for producing a vulcanized rubber for under tread, carcass, side wall or bead portion other than for tire tread.

### (Methods for production of rubber composition and vulcanized rubber)

The rubber composition of the present invention can be produced by kneading the rubber component (A), the filler (B) and other component added as necessary. In kneading, there can be used a kneader such as open type kneader (e.g. roll), closed type kneader (e.g. Banbury mixer) or the like. Incidentally, in kneading, addition of an extender oil to the rubber composition is preferred. The addition of the extender oil provides the rubber composition with good processability. The addition amount of the extender oil is preferably 6 to 55 mass parts, more preferably 10 to 50 mass parts relative to 100 mass parts of the rubber component (A). When the addition amount of the extender oil is smaller than 6 mass parts, it may be difficult to obtain both good processability and low fuel consumption. Meanwhile, when the addition amount is larger than 5 mass parts, it may be inferior in low fuel consumption.

### 2. Pneumatic tire

The pneumatic tire of the present invention is produced by using the above-mentioned rubber composition. More specifically, the pneumatic tire of the present invention is produced by using the obtained vulcanaized rubber by vulcanizing the above mentioned rubber composition. Therefore, the pneumatic tie of the present invention is excellent in abrasion resistance, breaking strength, rolling resistance, wet skid resistance, and the like.

The vulcanized rubber used for producing the pneumatic tire can be produced by molding the above-mentioned rubber composition and then vulcanizing at a temperature of, for example, 130 to 200°C. Incidentally, the method for vulcanization is not particularly restricted, and a known conventional vulcanization method for rubber composition can be used.

### EXAMPLES

The present invention is described specifically below by way of Examples. However, the present invention is not restricted to these Examples. Incidentally, in the following Examples and Comparative Examples, "parts" and "%" are based on mass unless otherwise specified. The measurements of properties and the evaluations of properties were made by the following methods.

### [Vinyl bond content (%) and bound styrene content (%)]

Measured and calculated using ¹H-NMR (270 MHz).

### [Cis-1,4 bond content (%) and 1,2-vinyl bond content (%)]

Calculated by using infrared method (Morero method).

### [Glass transition temperature (°C)]

Measured based on ASTM D3418.

### [Molecular weight distribution (Mw/Mn)]

Using a GPC "HLC-8120" (trade name, a product of Tosoh) and, as a detector, a differential refractometer, weight-average molecular weight (Mw) and number-average molecular weight (Mn) were measured under the conditions shown below, and molecular weight distribution (Mw/Mn) was calculated from the measured Mw and Mn.
Column: "Column GMHHXL" (trade name, a product of Tosoh)
Flow rate: 1.0 m/s
Temperature: 50°C

### [Mooney viscosity (ML₁₊₄, 100°C)]

Measured based on JIS K6300 by an L rotor at preheating of 1 minute, rotor operation time of 4 minutes and temperature of 100°C.

### [Tensile strength (300% modulus)

Measured based on JIS K6301 and calculated as an index when the value of the tensile strength of the rubber composition of Comparative Example 9 was taken as a standard

(100). Incidentally, a larger index obtained can be evaluated as giving a larger tensile strength and a better breaking strength.

### [tan δ (50°C) and tan δ (0°C)]

The tan δ (50°C) was measured using a dynamic spectrometer produced by U.S. Rheometrics, under the conditions of tensile dynamic strain of 1%, frequency of 10 Hz and temperature of 50°C. Incidentally, the tan δ (50°C) was calculated as an index when the value of the tan δ (50°C) of the rubber composition of Comparative Example 9 was taken as a standard (100). A larger index obtained can be evaluated as giving a smaller rolling resistance. Also, the tan δ (0°C) was measured using the same tester, under the conditions of tensile dynamic strain of 0.1%, frequency of 10 Hz and temperature of 0°C. Incidentally, the tan δ (0°C) was calculated as an index when the value of the tan δ (0°C) of the rubber composition of Comparative Example 9 was taken as a standard (100). A larger index obtained can be evaluated as giving a better wet skid resistance.

### [Abrasion resistance]

Abrasion amount at a slip ratio of 25% was measured at room temperature using a Lambourn type abrasion tester and calculated as an index when the abrasion amount of the rubber composition of Comparative Example 9 was taken as a standard (100). A larger index obtained can be evaluated as giving a better abrasion resistance.

### (Synthesis Example 1)

Into a nitrogen-purged, 5-liter (internal volume) autoclave reactor were fed 2,500 g of cyclohexane, 25 g of tetrahydrofuran, 100 g of styrene, and 390 g of 1,3-butadiene. The temperature of the contents in the reactor was adjusted to 20°C, then 375 mg of n-butyl lithium was added and polymerization was started. The polymerization was conducted under an adiabatic condition and the maximum temperature reached 85°C. At the timing when the polymerization conversion reached 99%, 10 g of butadiene was added and polymerization was conducted for 5 more minutes. Then, 1,043 g of methyltriethoxysilane was added as a modifier and the reaction was conducted for 15 minutes. After the termination of the polymerization reaction, 2,6-di-tert-butyl-p-cresol was added. Then, solvent removal was conducted by steam stripping. The resulting polymer was dried using a hot roll of temperature regulated to 110°C to obtain a modified styrene-butadiene copolymer (SBR-A). The SBR-A obtained had a vinyl bond content of 55%, a bound styrene content of 20%, a glass transition temperature of -36°C, a Mooney viscosity (ML₁₊₄, 100°C) of 28 and a weight-average molecular weight (Mw) of 2,300,000.

### (Synthesis Examples 2~5 and 7~10)

Operations were conducted in the same manner as in the above-described Synthesis Example 1 except that compounding recipes shown in Table 1 were used, to obtain modified styrene-butadiene copolymers (SBR-B, SBR-C, SBR-D, SBR-E, SBR-G, SBR-H, SBR-I and SBR-J). The vinyl bond content, bound styrene content, glass transition temperature, Mooney viscosity (ML₁₊₄, 100°C) and weight-average molecular weight (Mw) of the SBR-B∼SBR-E and SBR-G∼SBR-J obtained are shown in Table 1 and Table 2.

**Table 1**

| | | | Synthesis Example | | | | | |
|---|---|---|---|---|---|---|---|---|
| | | | 1 | 2 | 3 | 4 | 5 | 6 |
| Hydrocarbon | solvent (g) | Cyclohexane | 2500 | 2500 | 2500 | 2500 | 2500 | 2500 |
| Vinyl bond controlling | content-agent (g) | Tetrahydrofuran | 25 | 25 | 25 | 25 | 30 | 25 |
| Monomers | Conjugated diene compound (g) | 1,3-Butadiene | 400 | 400 | 400 | 400 | 400 | 400 |
| | Aromatic vinyl compound (g) | Styrene | 100 | 100 | 100 | 100 | 100 | 100 |
| Initiator (mg) | | n-Butyl lithium | 375 | 375 | 375 | 375 | 350 | 375 |
| | | Piperidine | - | - | - | - | - | 423 |
| Modifier | (mg) | Methyltriethoxysilane | 1043 | - | - | - | - | - |
| | | Trimethylolpropane glycidyl ether | - | 1768 | - | - | - | - |
| | | Diethylaminobenzophenone | - | - | 1482 | - | - | - |
| | | N,N'-diglycidyl-4-glycidyloxyaniline | - | - | - | 1622 | - | - |
| | | N-methylpyrrolidone | - | - | - | - | 579 | 579 |
| | | 3-(9-Trimethylsilyl-1-piperazino)propyltriethoxysilane | - | - | - | - | - | - |
| | | 1-[3-(triethoxysilyl)-propyl)-4-methylpiperazine | - | - | - | - | - | - |
| | | 3-Dimethylaminopropyl(diethoxy)methylsilane | - | - | - | - | - | - |
| | | N,N-bis(trimethylsilyl)aminopropyltriethoxysilane | - | - | - | - | - | - |
| Kind of modified styrene-butadiene copolymer | | | SBR-A | SBR-B | SBR-C | SBR-D | SBR-E | SBR-F |
| Properties | Vinyl bond content (%) | | 55 | 56 | 55 | 55 | 54 | 55 |
| | Bound styrene content (%) | | 20 | 19 | 21 | 21 | 21 | 21 |
| | Glass transition temperature (°C) | | -36 | -35 | -34 | -35 | -35 | -35 |
| | Mooney viscosity (ML₁₊₄, 100°C) | | 28 | 26 | 20 | 24 | 27 | 31 |
| | Mw (x10000) | | 23 | 24 | 24 | 23 | 24 | 24 |

**Table 2**

| | | | Synthesis Example | | | |
|---|---|---|---|---|---|---|
| | | | 7 | 8 | 9 | 10 |
| Hydrocarbon solvent (g) | | Cyclohexane | 2500 | 2500 | 2500 | 2500 |
| Vinyl bond content-controlling agent (g) | | Tetrahydrofuran | 25 | 25 | 25 | 25 |
| Monomers | Conjugated diene compound (g) | 1,3-Butadiene | 400 | 400 | 400 | 400 |
| | Aromatic vinyl compound (g) | Styrene | 100 | 100 | 100 | 100 |
| Initiator (mg) | | n-Butyl lithium | 375 | 375 | 375 | 375 |
| | | Piperidine | - | - | - | - |
| Modifier | (mg) | Methyltriethoxysilane | - | - | - | - |
| | | Trimethylolpropane glycidyl ether | - | - | - | - |
| | | Diethylaminobenzophenone | - | - | - | - |
| | | N,N'-diglycidyl-4-glycidyloxyaniline | - | - | - | - |
| | | N-methylpyrrolidone | - | - | - | - |
| | | 3-(4-Trimethylsilyl-1-piperazino)propyltriethoxysilane | 2120 | - | - | - |
| | | 1-[3-(triethoxysilyl)-propyl]-4-methylpiperazine | - | 1780 | - | - |
| | | 3-Dimethylaminopronyl(diethoxy)methylsilane | - | - | 1285 | - |
| | | N,N-bis(trimethylsilyl)aminopropyltriethoxysilane | - | - | - | 2130 |
| Kind of modified styrene-butadiene copolymer | | | SBR-G | SBR-H | SBR-I | SBR-J |
| Properties | Vinyl bond content (%) | | 55 | 55 | 55 | 55 |
| | Bound styrene content (%) | | 21 | 20 | 21 | 21 |
| | Glass transition temperature (°C) | | -35 | -35 | -36 | -36 |
| | Mooney viscosity (ML₁₊₄, 100°C) | | 28 | 29 | 18 | 24 |
| | Mw (x10000) | | 23 | 24 | 24 | 23 |

### (Synthesis Example 6)

Into a nitrogen-purged, 5-liter (internal volume) autoclave reactor were fed 2,500 g of cyclohexane, 25 g of tetrahydrofuran, 100 g of styrene, and 390 g of 1,3-butadiene. The temperature of the contents in the reactor was adjusted to 20°C, then an initiator prepared by reacting 375 mg of n-butyl lithium and 473 mg of piperidine in a cyclohexane solvent was added and polymerization was started. The polymerization was conducted under an adiabatic condition and the maximum temperature reached 85°C. At the timing when the polymerization conversion reached 99%, 10 g of butadiene was added and polymerization was conducted for 5 more minutes. Then, 579 mg g of N-methylpyrrolidone was added as a modifier and a reaction was conducted for 10 minutes. Then, 85 mg of tin tetrachloride was further added and the reaction was conducted for 10 minutes. After termination of the polymerization reaction, 2,6-di-tert-butyl-p-cresol was added. Then, solvent removal was conducted by steam stripping. The resulting polymer was dried using a hot roll of temperature regulated to 110°C to obtain a modified styrene-butadiene copolymer (SBR-F). The vinyl bond content, bound styrene content, glass transition temperature, Mooney viscosity (ML₁₊₄, 100°C) and weight-average molecular weight (Mw) of the obtained SBR-F are shown in Table 1.

### (Synthesis Example 11)

Into a nitrogen-purged, 5-liter autoclave were fed 2,400 g of cyclohexane and 300 g of 1,3-butadiene in a nitrogen atmosphere. Thereto was added a catalyst beforehand prepared by reacting and aging, at 50°C for 30 minutes, a cyclohexane solution of neodymium Versatate (0.09 mmol), a toluene solution of methylalumoxane (1.8 mmol), hydrogenated diisobutyl aluminum (5.0 mmol), a toluene solution of silicon tetrachloride (0.045 mmol) and 1,3-butadiene (4.5 mmol), and a polymerization reaction was conducted at 80°C for 60 minutes. The polymerization conversion of 1,3-butadiene was almost 100%. 200 g of the polymer solution was taken out; thereto was added a methanol solution containing 1.5 g of 2,4-di-tert-butyl-p-cresol; and the polymerization reaction was terminated. Then, solvent removal was conducted by steam stripping. The resulting polymer was dried by a roll of temperature regulated to 110°C to obtain a conjugated diene polymer. The obtained conjugated diene polymer (before modification) had a cis-1,4-bond content of 97%, a 1,2-vinyl bond content of 1.1%, a molecular weight distribution (Mw/Mn) of 2.2 and a Mooney viscosity (ML₁₊₄, 100°C) of 18.

To the remaining polymer solution kept at 60°C was added a toluene solution of 3-glycidoxypropyltrimethoxysilane (4.5 mmol), and a modification reaction was conducted for 30 minutes. Then, a toluene solution of tetra(2-ethylhexyloxy) titanium (13.5 mmol) was added, and mixed for 30 minutes. Then, a methanol solution containing 1.5 g of 2,4-di-tert-butyl-p-cresol was added to obtain 250 g of modified conjugated diene polymer solution. The modified conjugated diene polymer solution obtained was added to 20 liters of aqueous sodium hydroxide solution adjusted to pH 10. Solvent removal and a condensation reaction were conducted at 110°C for 2 hours. The resulting polymer was dried by a roll of temperature regulated to 110°C to obtain a modified conjugated diene polymer (BR-Y). The BR-Y obtained had a molecular weight distribution (Mw/Mn) of 2.7 and a Mooney viscosity (ML₁₊₄, 100°C) of 43.

### (Synthesis Example 12)

An operation was conducted in the same manner as in Synthesis Example 11 except that a compounding recipe shown in Table 3 was used, to obtain a modified conjugated diene polymer (BR-Z). The molecular weight distribution (Mw/Mn) and Mooney viscosity (ML₁₊₄, 100°C) of the BR-Z obtained are shown in Table 3.

**Table 3**

| | | | Synthesis Example | |
|---|---|---|---|---|
| | | | 11 | 12 |
| Hydrocarbon solvent (g) | | Cyclohexane | 2400 | 2400 |
| Monomer (g) | | 1,3-Butadiene | 300 | 300 |
| Catalysts (mmol) | | Neodymium Versatate | 0.09 | 0.09 |
| | | Methylalumoxane | 1.8 | 1.8 |
| | | Hydrogenated diisobutyl aluminum | 5 | 5 |
| | | Silicon tetrachloride | 0.045 | 0.045 |
| Alkoxysilane compound (mmol) | | 3-Glycidoxypropyltrimethoxysilane | 4.5 | 4.5 |
| Coupling agent (mmol) | | Tetra(2-ethylhexyloxy) titanium | 13.5 | - |
| | | Tin bis(2-ethylhexanoate) | - | 13.5 |
| Kind of modified conjugated diene polymer | | | BR-Y | BR-Z |
| Properties | Before modification reaction | Cis-1,4 bond content (%) | 97 | 96.8 |
| | | 1,2-vinyl bond content (%) | 1.1 | 1.1 |
| | | Mw/Mn | 2.2 | 2.3 |
| | | Mooney viscosity (ML₁₊₄, 100°C) | 18 | 20 |
| | After modification reaction and condensation reaction | Mw/Mn | 2.7 | 3.1 |
| | | Mooney viscosity (ML₁₊₄, 100°C) | 43 | 69 |

### (Example 1)

There were compounded 70 parts of modified styrene-butadiene copolymer (SBR-A), 30 parts of modified conjugated diene polymer (BR-Y), 37.5 parts of extender oil ["Aromax #3" (trade name, a product of Fuji Kosan Company, Ltd.)], 70 parts of silica ["Nipsil AQ" (trade name, a product of Nippon Silica Industrial Co., Ltd.)], 5.6 parts of carbon black ["Dia Black N 339" (trade name, a product of Mitsubishi Chemical Corporation)], 5.6 parts of a silane coupling agent ["Si 69" (trade name, a product of Degusa Japan Co., Ltd.)], 2 parts of stearic acid, 1 part of an anti-aging agent ["NOCRAC 810 NA" (trade name, a product of Ouchi Shinko Chemical Industrial Co., Ltd.)], 3 parts of zinc oxide, 1.5 parts of a vulcanization accelerator NS ["NOCCELER NS·F" (trade name, a product of Ouchi Shinko Chemical Industrial Co., Ltd.)], 1.8 parts of a vulcanization accelerator CZ ["NOCCELER CZ" (trade name, a product of Ouchi Shinko Chemical Industrial Co., Ltd.)], and 1.5 parts of sulfur, to obtain a compound. Incidentally, the compounding recipe is shown in Table 4. The compound was kneaded using a 250cc laboratory plastomill, to obtain a rubber composition (Example 1). The rubber composition was vulcanized at 145°C to prepare a vulcanized rubber. The vulcanized rubber had a tensile strength (index) of 118, a tan δ (0°C) (index) of 116, a tan δ (50°C) (index) of 129, and an abrasion resistance (index) of 122.

### (Examples 2~20 and Comparative Examples 1~9)

Operations were conducted in the same manner as in Example 1 except that there were used (modified) styrene-butadiene copolymers and (modified) conjugated diene polymers, shown in Table 5 and Table 6, to obtain rubber compositions (Examples 2~20 and Comparative Examples 1~9). Additionally, using the rubber compositions (Examples 2~20 and Comparative Examples 1~9), vulcanized rubbers were prepared in the same manner as in Example 1. The tensile strength (index), tan δ (0°C) (index), tan δ (50°C) (index) and abrasion resistance (index) of each vulcanized rubbers are shown in Table 5 and 6.

**Table 4**

| Compounding recipe | Mass parts |
|---|---|
| (Modified) styrene-butadiene copolymer | 70 |
| (Modified) conjugated diene polymer | 30 |
| Extender oil | 37.5 |
| Silica | 70 |
| Carbon black | 5.6 |
| Silane coupling agent | 5.6 |
| Stearic acid | 2 |
| Anti-aging agent | 1 |
| Zinc oxide | 3 |
| Vulcanization accelerator NS | 1.5 |
| Vulcanization accelerator CZ | 1.8 |
| Sulfur | 1.5 |

**Table 5**

| | Kind of (modified) styrene-butadiene copolymer | Kind of (modified) conjugated diene polymer | Tensile strength (index) | tan δ (0°C) (index) | tan δ (50°C) (index) | Abrasion resistance (index) |
|---|---|---|---|---|---|---|
| Example 1 | SBR-A | BR-Y | 118 | 116 | 129 | 122 |
| Example 2 | SBR-A | BR-Z | 119 | 115 | 128 | 121 |
| Example 3 | SBR-B | BR-Y | 113 | 114 | 125 | 119 |
| Example 4 | SBR-B | BR-Z | 112 | 114 | 124 | 118 |
| Example 5 | SBR-C | BR-Y | 114 | 115 | 121 | 116 |
| Example 6 | SBR-C | BR-Z | 113 | 115 | 121 | 116 |
| Example 7 | SBR-D | BR-Y | 120 | 116 | 127 | 123 |
| Example 8 | SBR-D | BR-Z | 119 | 116 | 128 | 122 |
| Example 9 | SBR-E | BR-Y | 116 | 114 | 126 | 120 |
| Example 10 | SBR-E | BR-Z | 116 | 114 | 126 | 119 |
| Example 11 | SBR-F | BR-Y | 123 | 116 | 132 | 128 |
| Example 12 | SBR-F | BR-Z | 122 | 116 | 133 | 129 |
| Example 13 | SBR-G | BR-Y | 125 | 123 | 138 | 125 |
| Example 14 | SBR-G | BR-Z | 124 | 124 | 137 | 124 |
| Example 15 | SBR-H | BR-Y | 123 | 119 | 132 | 124 |
| Example 16 | SBR-H | BR-Z | 122 | 120 | 131 | 123 |
| Example 17 | SBR-I | BR-Y | 120 | 116 | 130 | 121 |
| Example 18 | SBR-I | BR-Z | 121 | 117 | 129 | 122 |
| Example 19 | SBR-J | BR-Y | 127 | 122 | 143 | 135 |
| Example 20 | SBR-J | BR-Z | 125 | 123 | 145 | 139 |

**Table 6**

| | Kind of (modified) styrene-butadiene copolymer | Kind of (modified) conjugated diene polymer | Tensile strength (index) | tan δ (0°C) (index) | tan δ (50°C) (index) | Abrasion resistance (index) |
|---|---|---|---|---|---|---|
| Comparative Example 1 | SL 563 | BR-Y | 105 | 101 | 110 | 108 |
| Comparative Example 2 | SL 563 | BR-Z | 105 | 100 | 110 | 107 |
| Comparative Example 3 | SBR-A | BR 01 | 108 | 108 | 115 | 110 |
| Comparative Example 4 | SBR-B | BR 01 | 105 | 107 | 113 | 109 |
| Comparative Example 5 | SBR-C | BR 01 | 105 | 108 | 113 | 107 |
| Comparative Example 6 | SBR-D | BR 01 | 109 | 106 | 114 | 111 |
| Comparative Example 7 | SBR-E | BR 01 | 107 | 106 | 116 | 108 |
| Comparative Example 8 | SBR-F | BR 01 | 112 | 107 | 119 | 113 |
| Comparative Example 9 | SL 563 | BR 01 | 100 | 100 | 100 | 100 |

Incidentally, the (modified) styrene-butadiene copolymer and (modified) conjugated diene polymer, shown in abbreviated forms in Table 6 are as follows.

.
SL 563: "styrene-butadiene rubber SL 563" (trade name, a product of JSR) [vinyl bond content = 55%, bound styrene content = 20%, Mooney viscosity (ML₁₊₄, 100°C) = 75]
BR 01: "polybutadiene rubber BR 01" (trade name, a product of JSR) [cis-1, 4bond content = 95%, 1,2-vinyl bond content = 2.5%, Mooney viscosity (ML₁₊₄, 100°C) = 45]

As is clear from the results shown in Table 5 and Table 6, vulcanized rubbers significantly improved in tensile strength, rolling resistance [tan δ (50°C)], wet skid resistance [tan δ (0°C)] and abrasion resistance can be prepared using the rubber compositions of Examples 1~20 obtained by compounding a modified styrene-butadiene copolymer having, at its' terminals, alkoxysilyl group, hydroxyl group, epoxy group, primary amino group, secondary amino group, tertiary amino group or hetero ring, and a modified conjugated diene polymer modified with an alkoxysilane compound, as compared with when using the rubber compositions of Comparative Examples · 1∼9.

### INDUSTRIAL APPLICABILITY

With the rubber composition of the present invention, there can be produced and put into market a high-performance pneumatic tire excellent in properties such as tensile strength, rolling resistance, wet skid resistance, abrasion resistance, and the like.

## Claims

1. A rubber composition comprising
a rubber component (A) comprising a diene rubber comprising 20 mass % or more of a modified styrene-butadiene copolymer (a1) which is an terminal-modified styrene-butadiene copolymer and 5 mass % or more of a modified conjugated diene polymer (a2), and
a filler (B), wherein
the modified conjugated diene polymer (a2) is a polymer obtained by subjecting the active terminals of a conjugated diene polymer having a cis-1,4 bond content of 80% or higher, at least to primary modification with an alkoxysilane compound, and
the filler (B) comprises at least either of 2 to 100 mass parts, relative to 100 mass parts of the rubber component (A), of carbon black (b1) and 30 to 100 mass parts, relative to 100 mass parts of the rubber component (A), of silica (b2).

2. The rubber composition according to Claim 1, which further comprises 5 to 20 mass parts, relative to 100 mass parts of the silica (b2), of a silane coupling agent, when the filler (B) comprises the silica (b2).

3. The rubber composition according to Claim 1 or 2,
wherein the modified styrene-butadiene copolymer (a1) is a copolymer obtained by subjecting butadiene and styrene to anionic polymerization in a hydrocarbon solvent using, as an initiator, at least one compound selected from the group consisting of an organic alkaline metal, an organic alkaline earth metal, an alkaline metal amide compound and an alkaline earth metal amide compound, and then to a reaction of the active terminals of the polymer with a modifier.

4. The rubber composition according to any one of Claims 1 to 3, wherein the modified styrene-butadiene copolymer (a1) is a styrene-butadiene copolymer obtained by introducing, to the terminals of the styrene-butadiene copolymer, at least one functional group selected from the group consisting of epoxy group, hydroxyl group, primary amino group, secondary amino group, tertiary amino group, hetero ring, and alkoxysilyl group.

5. The rubber composition according to any one of Claims 1 to 4, wherein the modified conjugated diene polymer (a2) is a conjugated diene polymer obtained by subjecting the active terminals of the conjugated diene polymer to primary modification with the alkoxysilane compound and then subjecting the resulting conjugated diene polymer to secondary modification in the presence of a condensation accelerator.

6. The rubber composition according to any one of Claims 1 to 5, wherein the alkoxysilane compound is at least one member selected from the group consisting of a compound represented by the following general formula (1), a compound represented by the following general formula (2), a compound represented by the following general formula (3), and partial condensates of these compounds. 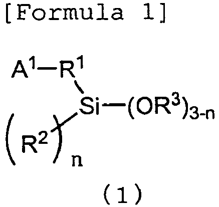 [In the general formula (1), A¹ is a monovalent group having at least one functional group selected from the group consisting of (thio)epoxy group, (thio)isocyanate group, (thio)ketone group, (thio)aldehyde group, imino group, cyano group, amide group, isocyanuric acid trihydrocarbyl ester group, (thio)carboxylic acid ester group, metal salt of (thio)carboxylic acid, carboxylic acid anhydride, carboxylic acid halide, and carbonic acid dihydrocarbyl ester group; R¹ is a single bond or a bivalent inactive hydrocarbon group; R² and R³ are each independently a monovalent aliphatic hydrocarbon group of 1 to 20 carbon atoms or a monovalent aromatic hydrocarbon group of 6 to 18 carbon atoms; and n is an integer of 0 to 2. When there is a plurality of R²s, the R²s may be the same or different from each other.
Additionally, when there is a plurality of OR³s, the OR³s may be the same or different from each other. Incidentally, the compound represented by the general formula (1) contains, in the molecule, neither active proton nor onium salt.] 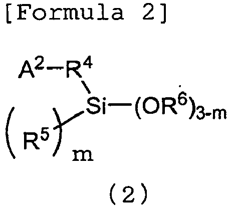 [In the general formula (2), A² is a monovalent group having at least one functional group selected from the group consisting of cyclic or acyclic tertiary amino group, pyridyl group, sulfide group, and multi-sulfide group; R⁴ is a single bond or a bivalent inactive hydrocarbon group; R⁵ and R⁶ are each independently a monovalent aliphatic hydrocarbon group of 1 to 20 carbon atoms or a monovalent aromatic hydrocarbon group of 6 to 18 carbon atoms; and m is an integer of 0 to 2. When there is a plurality of R⁵s, the R⁵s may be the same or different from each other. Additionally, when there is a plurality of OR⁶s, the OR⁶s may be the same or different from each other. Incidentally, the compound represented by the general formula (2) contains, in the molecule, neither active proton nor onium salt.] 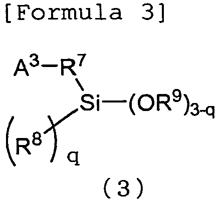 [In the general formula (3), A³ is a monovalent group having at least one functional group selected from the group consisting of hydroxyl group, thiol group, primary amino group, onium salt of primary amine, cyclic or acyclic secondary amino group, onium salt of cyclic or acyclic secondary amine, onium salt of cyclic or acyclic tertiary amine, group having aryl Sn bond or arylalkyl Sn bond, sulfonyl group, and sulfinyl group; R⁷ is a single bond or a bivalent inactive hydrocarbon group; R⁸ and R⁹ are each independently a monovalent aliphatic hydrocarbon group of 1 to 20 carbon atoms or a monovalent aromatic hydrocarbon group of 6 to 18 carbon atoms; and q is an integer of 0 to 2. When there is a plurality of R⁸s, the R⁸s may be the same or different from each other. Additionally, when there is a plurality of OR⁹s, the OR⁹s may be the same or different from each other.]

7. The rubber composition according to Claim 6, wherein the alkoxysilane compound is at least either of the compound represented by the general formula (1) and the partial condensate of the compounds represented by the general formula (1).

8. The rubber composition according to Claim 7, wherein the alkoxysilane compound is at least one member selected from the group consisting of 3-glycidoxypropyltrimethoxysilane, 3-glycidoxypropyltriethoxysilane, and partial condensate of these compounds.

9. The rubber composition according to Claim 5, wherein the condensation accelerator comprises at least one compound selected from the group consisting of a carboxylate of 3 to 20 carbon atoms, with tin of oxidation number 2, represented by the following general formula (10), a compound of tin of oxidation number 4, represented by the following general formula (11), and a compound of titanium of oxidation number 4, represented by the following general formula (12) and water.
Sn(OCOR¹⁷)₂ (10)
[In the general formula (10), R¹⁷s are each independently an organic group of 2 to 19 carbon atoms.]
R¹⁸ᵣSnA⁴ₜB¹₍₄₋ₜ₋ᵣ₎ (11)
[In the general formula (11), A⁴ is a siloxy group substituted with total of three substituents (which may be the same or different from each other) selected from the group consisting of an aliphatic carboxylic acid residue of 2 to 30 carbon atoms, a 1,3-dicarbonyl-containing group of 5 to 30 carbon atoms, a hydrocarbyloxy group of 1 to 30 carbon atoms, and a hydrocarbyl group of 1 to 20 carbon atoms; B¹ is a hydroxyl group or a halogen atom; R¹⁸ is an aliphatic hydrocarbon group of 1 to 30 carbon atoms; r is an integer of 1 to 3; t is an integer of 1 or 2; and t+r = 3 or 4. When there is a plurality of A⁴s, the A⁴s may be the same or different from each other. When there is a plurality of R¹⁸s, the R¹⁸s may be the same or different from each other.]
A⁵xTiB²₍₄₋ₓ₎ (12)
[In the general formula (12), A⁵ is a siloxy group substituted with total of three substituents selected from the group consisting of a hydrocarbyloxy group of 1 to 30 carbon atoms and an alkyl group of 1 to 30 carbon atoms; B² is a 1,3-dicarbonyl-containing group of 5 to 30 carbon atoms; and x is an integer of 2 or 4. When there is a plurality of A⁵s, the A⁵s may be the same or different from each other. When there is a plurality of B²s, the B²s may be the same or different from each other.]

10. The rubber composition according to any one of Claims 1 to 9, wherein the modified conjugated diene polymer (a2) is a modified polybutadiene.

11. The rubber composition according to any one of Claims 1 to 10, which is used for a vulcanized rubber for tire tread.

12. A pneumatic tire produced using a rubber composition according to any one of Claims 1 to 11.

## Patentansprüche

1. Kautschukzusammensetzung, umfassend
eine Kautschukkomponente (A), die einen Dienkautschuk umfasst, der 20 Massen% oder mehr eines modifizierten Styrol-Butadiencopolymers (a1), welches ein End-modifiziertes Styrol-Butadiencopolymer ist, und 5 Massen% oder mehr eines modifizierten konjugierten Dienpolymers (a2) umfasst, und
einen Füllstoff (B),
wobei
das modifizierte konjugierte Dienpolymer (a2) ein Polymer ist, das durch das Unterwerfen der aktiven Enden eines konjugierten Dienpolymers mit einem cis-1,4 Bindungsgehalt von 80% oder höher zumindest einer primären Modifikation mit einer Alkoxysilanverbindung erhalten ist, und
der Füllstoff (B) zumindest eines aus 2 bis 100 Massenteilen, relativ zu 100 Massenteilen der Kautschukkomponenten (A), an Kohlenschwarz (b1) oder 30 bis 100 Massenteilen, relativ zu 100 Massenteilen der Kautschukkomponente (A), an Siliciumdioxid (b2) umfasst.

2. Kautschukzusammensetzung nach Anspruch 1, welche ferner 5 bis 20 Massenteile, relativ zu 100 Massenteilen des Siliciumdioxids (b2), eines Silankupplungsmittels umfasst, wenn der Füllstoff (B) das Siliciumdioxid (b2) umfasst.

3. Kautschukzusammensetzung nach Anspruch 1 oder 2, wobei das modifizierte Styrol-Butadiencopolymer (a1) ein Copolymer ist, das durch Unterwerfen von Butadien und Styrol einer anionischen Polymerisation in einem Kohlenwasserstofflösungsmittel unter Verwendung, als ein Initiator, zumindest einer Verbindung ausgewählt aus der Gruppe bestehend aus einem organischen Alkalimetall, einem organischen Erdalkalimetall, einer Alkalimetallamidverbindung und einer Erdalkalimetallamidverbindung, und dann einer Reaktion der aktiven Enden des Polymers mit einem Modifizierer erhalten ist.

4. Kautschukzusammensetzung nach einem der Ansprüche 1 bis 3, wobei das modifizierte Styrol-Butadiencopolymer (a1) ein Styrol-Butadiencopolymer ist, das durch Einführen von zumindest einer funktionellen Gruppe ausgewählt aus der Gruppe bestehend aus einer Epoxidgruppe, Hydroxylgruppe, primären Aminogruppe, sekundären Aminogruppe, tertiären Aminogruppe, einem Heteroring und einer Alkoxysilylgruppe zu den Enden des Styrol-Butadiencopolymers erhalten ist.

5. Kautschukzusammensetzung nach einem der Ansprüche 1 bis 4, wobei das modifizierte konjugierte Dienpolymer (a2) ein konjugiertes Dienpolymer ist, das durch Unterwerfen der aktiven Enden des konjugierten Dienpolymers einer primären Modifikation mit der Alkoxysilanverbindung und dann Unterwerfen des resultierenden konjugierten Dienpolymers einer sekundären Modifikation in der Anwesenheit eines Kondensationsbeschleunigers erhalten ist.

6. Kautschukzusammensetzung nach einem der Ansprüche 1 bis 5, wobei die Alkoxysilanverbindung zumindest ein Element ist, das ausgewählt ist aus der Gruppe bestehend aus einer durch die folgende allgemeine Formel (1) dargestellten Verbindung, einer durch die folgende allgemeine Formel (2) dargestellten Verbindung, einer durch die folgende allgemeine Formel (3) dargestellten Verbindung und Teilkondensaten dieser Verbindungen. 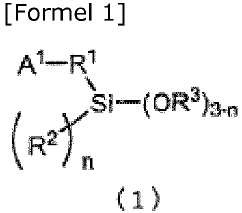 [In der allgemeinen Formel (1) ist A¹ eine monovalente Gruppe mit zumindest einer funktionellen Gruppen ausgewählt aus der Gruppe bestehend aus einer (Thio)epoxidgruppe, einer (Thio)isocyanatgruppe, einer (Thio)ketongruppe, einer (Thio)aldehydgruppe, einer Iminogruppe, einer Cyanogruppe, einer Amidgruppe, einer Isocyanursäuretrihydroxycarbylestergruppe, einer (Thio)carboxylsäurestergruppe, einem Metallsalz von einer (Thio)carboxylsäure, einem Carboxylsäureanhydrid, einem Carboxylsäurehalogenid und einer Carbonsäuredihydrocarbylestergruppe; ist R¹ eine Einfachbindung oder eine bivalente inaktive Kohlenwasserstoffgruppe; sind R² und R³ jeweils unabhängig eine monovalente alipathische Kohlenwasserstoffgruppe von 1 bis 20 Kohlenstoffatomen oder eine monovalente aromatische Kohlenwasserstoffgruppe von 6 bis 18 Kohlenstoffatomen; und ist n eine ganze Zahl von 0 bis 2. Wenn eine Mehrzahl an R²s vorhanden sind, können die R²s gleich oder unterschiedlich zueinander sein. Zusätzlich, wenn eine Mehrzahl an OR³s vorhanden ist, können die OR³s gleich oder unterschiedlich zueinander sein. Im Übrigen enthält die durch die allgemeine Formel (1) dargestellte Verbindung in dem Molekül weder ein aktives Proton noch ein Oniumsalz.] 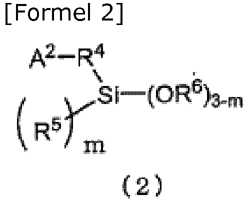 [In der allgemeinen Formel (2) ist A² eine monovalente Gruppe mit zumindest einer funktionellen Gruppe ausgewählt aus der Gruppe bestehend aus einer cyclischen oder acyclischen tertiären Aminogruppe, einer Pyridylgruppe, einer Sulfidgruppe und einer Multi-Sulfidgruppe; ist R⁴ eine Einfachbindung oder eine bivalente inaktive Kohlenwasserstoffgruppe; sind R⁵ und R⁶ jeweils unabhängig eine monovalente alipathische Kohlenwasserstoffgruppe von 1 bis 20 Kohlenstoffatomen oder eine monovalente aromatische Kohlenwasserstoffgruppe von 6 bis 18 Kohlenstoffatomen; und ist m eine ganze Zahl von 0 bis 2. Wenn eine Mehrzahl an R⁵s vorhanden ist, können die R⁵s gleich oder unterschiedlich zueinander sein. Zusätzlich, wenn eine Mehrzahl an OR⁶s zueinander ist, können die OR⁶s gleich oder unterschiedlich zueinander sein. Im Übrigen enthält die durch die allgemeine Formel (2) dargestellte Verbindung in dem Molekül weder ein aktives Proton noch ein Oniumsalz.] 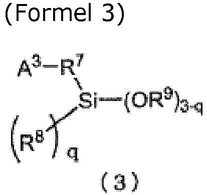 [In der allgemeinen Formel (3) ist A³ eine monovalente Gruppe mit zumindest einer funktionellen Gruppe ausgewählt aus der Gruppe bestehend aus einer Hydroxylgruppe, einer Thiolgruppe, einer primären Aminogruppe, einem Oniumsalz eines primären Amins, einer cyclischen oder acyclischen sekundären Aminogruppe, einem Oniumsalz eines cyclischen oder acyclischen sekundären Amins, einem Oniumsalz eines cyclischen oder acyclischen tertiären Amins, einer Gruppe mit einer Aryl-Sn-Bindung oder einer Arylalkyl-Sn-Bindung, einer Sulfonylgruppe, und einer Sulfinylgruppe; ist R⁷ eine Einfachbindung oder eine bivalente inaktive Kohlenwasserstoffgruppe; sind R⁸ und R⁹ jeweils unabhängig eine monovalente aliphatische Kohlenwasserstoffgruppe von 1 bis 20 Kohlenstoffatomen oder eine monovalente aromatische Kohlenwasserstoffgruppe von 6 bis 18 Kohlenstoffatomen; und ist q eine ganze Zahl von 0 bis 2. Wenn eine Mehrzahl an R⁸s vorhanden ist, können die R⁸s gleich oder unterschiedlich zueinander sein. Zusätzlich, wenn eine Mehrzahl an OR⁹s vorhanden ist, können die OR⁹s gleich oder unterschiedlich zueinander sein.]

7. Kautschukzusammensetzung nach Anspruch 6, wobei die Alkoxysilanverbindung zumindest eine aus der durch die allgemeine Formel (1) dargestellten Verbindung und dem Teilkondensat der durch die allgemeine Formel (1) dargestellten Verbindung ist.

8. Kautschukzusammensetzung nach Anspruch 7, wobei die Alkoxysilanverbindung zumindest ein Element ist ausgewählt aus der Gruppe bestehend aus 3-Glycidoxypropyltrimethoxysilan, 3-Glycidoxypropyltriethoxysilan und einem Teilkondensat dieser Verbindungen.

9. Kautschukzusammensetzung nach Anspruch 5, wobei der Kondensationsbeschleuniger zumindest eine Verbindung umfasst, die ausgewählt ist aus der Gruppe bestehend aus einem Carboxylat von 3 bis 20 Kohlenstoffatomen, mit Zinn der Oxidationszahl 2, dargestellt durch die folgende allgemeine Formel (10), einer Verbindung von Zinn der Oxidationszahl 4, dargestellt durch die folgende allgemeine Formel (11) und einer Verbindung aus Titan der Oxidationszahl 4, dargestellt durch die folgende allgemeine Formel (12) und Wasser.
Sn(OCOR¹⁷)₂ (10)
[In der allgemeinen Formel (10) sind die R¹⁷s jeweils unabhängig eine organische Gruppe von 2 bis 19 Kohlenstoffatomen.]
R¹⁸ᵣSnA⁴ₜB¹₍₄₋ₜ₋ᵣ₎ (11)
[In der allgemeinen Formel (11) ist A⁴ eine Siloxygruppe, die mit insgesamt drei Substituenten substituiert ist (welche gleich oder unterschiedlich zueinander sein können), die ausgewählt sind aus der Gruppe bestehend aus einem aliphatischen Carboxylsäurerest von 2 bis 30 Kohlenstoffatomen, einer 1,3-Dicarbonyl-enthaltenden Gruppe von 5 bis 30 Kohlenstoffatomen, einer Hydrocarbyloxygruppe von 1 bis 30 Kohlenstoffatomen und einer Hydrocarbylgruppe von 1 bis 20 Kohlenstoffatomen; ist B¹ eine Hydroxylgruppe oder ein Halogenatom; ist R¹⁸ eine aliphatische Kohlenwasserstoffgruppe von 1 bis 30 Kohlenstoffatomen; ist r eine ganze Zahl von 1 bis 3, ist t eine ganze Zahl von 1 oder 2; und t + r = 3 oder 4. Wenn eine Mehrzahl an A⁴s vorhanden ist, können die A⁴s gleich oder unterschiedlich zueinander sein. Wenn eine Mehrzahl an R¹⁸s vorhanden ist, können die R¹⁸s gleich oder unterschiedlich zueinander sein.]
A⁵xTiB²₍₄₋ₓ₎ (12)
[In der allgemeinen Formel (12) ist A⁵ eine Siloxygruppe, die mit insgesamt drei Substituenten substituiert ist, die ausgewählt sind aus der Gruppe bestehend aus einer Hydrocarbyloxygruppe von 1 bis 30 Kohlenstoffatomen und einer Alkylgruppe von 1 bis 30 Kohlenstoffatomen; ist B² eine 1,3-Dicarbonyl-enthaltende Gruppe von 5 bis 30 Kohlenstoffatomen; und ist x eine ganze Zahl von 2 oder 4. Wenn eine Mehrzahl an A⁵s vorhanden ist, können die A⁵s gleich oder unterschiedlich zueinander sein. Wenn eine Mehrzahl an B²s vorhanden ist, können die B²s gleich oder unterschiedlich zueinander sein.]

10. Kautschukzusammensetzung nach einem der Ansprüche 1 bis 9, wobei das modifizierte konjugierte Dienpolymer (a2) ein modifiziertes Polybutadien ist.

11. Kautschukzusammensetzung nach einem der Ansprüche 1 bis 10, welche für einen vulkanisierten Kautschuk für ein Reifenprofil verwendet wird.

12. Luftreifen, der unter Verwendung einer Kautschukzusammensetzung nach einem der Ansprüche 1 bis 11 hergestellt ist.

## Revendications

1. Composition de caoutchouc comprenant
un constituant caoutchouc (A) comprenant un caoutchouc diénique comprenant 20 % en masse ou plus d'un copolymère de styrène-butadiène modifié (a1) qui est un copolymère de styrène-butadiène à modification terminale et 5 % en masse ou plus d'un polymère de diène conjugué modifié (a2), et
une charge (B),
dans laquelle
le polymère de diène conjugué modifié (a2) est un polymère obtenu en soumettant les extrémités actives d'un polymère de diène conjugué ayant une teneur en liaisons cis-1,4 de 80 % ou plus, à au moins une modification primaire avec un composé alcoxysilane, et
la charge (B) comprend au moins l'un ou l'autre de 2 à 100 parties en masse, par rapport à 100 parties en masse du constituant caoutchouc (A), de noir de carbone (b1) et 30 à 100 parties en masse, par rapport à 100 parties en masse du constituant caoutchouc (A), de silice (b2).

2. Composition de caoutchouc selon la revendication 1, qui comprend en outre 5 à 20 parties en masse, par rapport à 100 parties en masse de la silice (b2), d'un agent de couplage silane, lorsque la charge (B) comprend la silice (b2).

3. Composition de caoutchouc selon la revendication 1 ou 2, dans laquelle le copolymère de styrène-butadiène modifié (a1) est un copolymère obtenu en soumettant du butadiène et du styrène à une polymérisation anionique dans un solvant hydrocarboné en utilisant, comme initiateur, au moins un composé choisi dans le groupe constitué par un métal alcalin organique, un métal alcalino-terreux organique, un composé amide de métal alcalin et un composé amide de métal alcalino-terreux, puis à une réaction des extrémités actives du polymère avec un agent modificateur.

4. Composition de caoutchouc selon l'une quelconque des revendications 1 à 3, dans laquelle le copolymère de styrène-butadiène modifié (a1) est un copolymère de styrène-butadiène obtenu par introduction, aux extrémités du copolymère de styrène-butadiène, d'au moins un groupe fonctionnel choisi dans le groupe constitué par un groupe époxy, un groupe hydroxyle, un groupe amino primaire, un groupe amino secondaire, un groupe amino tertiaire, un hétéro cycle et un groupe alcoxysilyle.

5. Composition de caoutchouc selon l'une quelconque des revendications 1 à 4, dans laquelle le polymère de diène conjugué modifié (a2) est un polymère de diène conjugué obtenu en soumettant les extrémités actives du polymère de diène conjugué à une modification primaire avec le composé alcoxysilane, puis en soumettant le polymère de diène conjugué résultant à une modification secondaire en présence d'un accélérateur de condensation.

6. Composition de caoutchouc selon l'une quelconque des revendications 1 à 5, dans laquelle le composé alcoxysilane est au moins un élément choisi dans le groupe constitué par un composé représenté par la formule générale
(1) suivante, un composé représenté par la formule générale
(2) suivante, un composé représenté par la formule générale
(3) suivante, et des condensats partiels de ces composés. 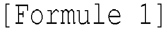 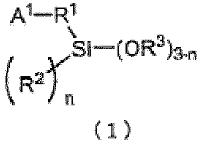 [Dans la formule générale (1), A¹ est un groupe monovalent ayant au moins un groupe fonctionnel choisi dans le groupe constitué par un groupe (thio)époxy, un groupe (thio)isocyanate, un groupe (thio)cétone, un groupe (thio)aldéhyde, un groupe imino, un groupe cyano, un groupe amide, un groupe ester trihydrocarbylique d'acide isocyanurique, un groupe ester d'acide (thio)carboxylique, un sel métallique d'acide (thio)carboxylique, un anhydride d'acide carboxylique, un halogénure d'acide carboxylique et un groupe ester dihydrocarbylique d'acide carbonique ; R¹ est une simple liaison ou un groupe hydrocarboné divalent inactivé ; R² et R³ sont chacun indépendamment un groupe hydrocarboné aliphatique monovalent de 1 à 20 atomes de carbone ou un groupe hydrocarboné aromatique monovalent de 6 à 18 atomes de carbone ; et n est un nombre entier de 0 à 2. Lorsqu'il existe une pluralité de R², les R² peuvent être identiques ou différents les uns des autres. En outre, lorsqu'il existe une pluralité de OR³, les OR³ peuvent être identiques ou différents les uns des autres. Par ailleurs, le composé représenté par la formule générale (1) contient, dans la molécule, ni proton actif, ni sel d'onium]. 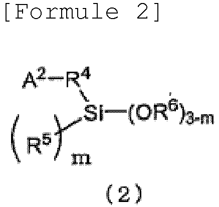 [Dans la formule générale (2), A² est un groupe monovalent ayant au moins un groupe fonctionnel choisi dans le groupe constitué par un groupe amino tertiaire cyclique ou acyclique, un groupe pyridyle, un groupe sulfure et un groupe multi-sulfure ; R⁴ est une simple liaison ou un groupe hydrocarboné divalent inactif ; R⁵ et R⁶ sont chacun indépendamment un groupe hydrocarboné aliphatique monovalent de 1 à 20 atomes de carbone ou un groupe hydrocarboné aromatique monovalent de 6 à 18 atomes de carbone ; et m est un nombre entier de 0 à 2. Lorsqu'il existe une pluralité de R⁵, les R⁵ peuvent être identiques ou différents les uns des autres. En outre, lorsqu'il existe une pluralité de OR⁶, les OR⁶ peuvent être identiques ou différents les uns des autres. Par ailleurs, le composé représenté par la formule générale (2) contient, dans la molécule, ni proton actif, ni sel d'onium]. 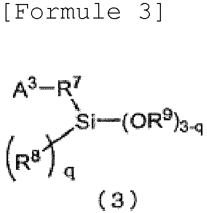 [Dans la formule générale (3), A³ est un groupe monovalent ayant au moins un groupe fonctionnel choisi dans le groupe constitué par un groupe hydroxyle, un groupe thiol, un groupe amino primaire, un sel d'onium d'une amine primaire, un groupe amino secondaire cyclique ou acyclique, un sel d'onium d'une amine secondaire cyclique ou acyclique, un sel d'onium d'une amine tertiaire cyclique ou acyclique, un groupe ayant une liaison aryle Sn ou une liaison arylalkyle Sn, un groupe sulfonyle et un groupe sulfinyle ; R⁷ est une simple liaison ou un groupe hydrocarboné divalent inactif ; R⁸ et R⁹ sont chacun indépendamment un groupe hydrocarboné aliphatique monovalent de 1 à 20 atomes de carbone ou un groupe hydrocarboné aromatique monovalent de 6 à 18 atomes de carbone ; et q est un nombre entier de 0 à 2. Lorsqu'il existe une pluralité de R⁸, les R⁸ peuvent être identiques ou différents les uns des autres. En outre, lorsqu'il existe une pluralité de OR⁹, les OR⁹ peuvent être identiques ou différents les uns des autres].

7. Composition de caoutchouc selon la revendication 6, dans laquelle le composé alcoxysilane est au moins l'un ou l'autre du composé représenté par la formule générale (1) et la condensation partielle des composés représentés par la formule générale (1).

8. Composition de caoutchouc selon la revendication 7, dans laquelle le composé alcoxysilane est au moins un élément choisi dans le groupe constitué par le 3-glycidoxypropyltriméthoxysilane, le 3-glycidoxypropyltriéthoxysilane et un condensat partiel de ces composés.

9. Composition de caoutchouc selon la revendication 5, dans laquelle l'accélérateur de condensation comprend au moins un composé choisi dans le groupe constitué par un carboxylate de 3 à 20 atomes de carbone, avec de l'étain du degré d'oxydation 2, représenté par la formule générale (10) suivante, un composé d'étain de degré d'oxydation 4, représenté par la formule générale (11) suivante, et un composé de titane de degré d'oxydation 4, représenté par la formule générale (12) suivante et de l'eau.
Sn(OCOR¹⁷))₂ (10)
[dans la formule générale (10), les R¹⁷ sont chacun indépendamment un groupe organique de 2 à 19 atomes de carbone.]
R¹⁸ᵣSnA⁴ₜB¹₍₄₋ₜ₋ᵣ₎ (11)
[dans la formule générale (11), A⁴ est un groupe siloxy substitué par un total de trois substituants (qui peuvent être identiques ou différents les uns des autres) choisis dans le groupe constitué par un résidu d'acide carboxylique aliphatique de 2 à 30 atomes de carbone, un groupe contenant du 1,3-dicarbonyle de 5 à 30 atomes de carbone, un groupe hydrocarbyloxy de 1 à 30 atomes de carbone, et un groupe hydrocarbyle de 1 à 20 atomes de carbone ; B¹ est un groupe hydroxyle ou un atome d'halogène ; R¹⁸ est un groupe hydrocarboné aliphatique de 1 à 30 atomes de carbone ; r est un nombre entier de 1 à 3 ; t est un nombre entier de 1 ou 2 ; et t+r = 3 ou 4. Lorsqu'il existe une pluralité de A⁴, les A⁴ peuvent être identiques ou différents les uns des autres. Lorsqu'il existe une pluralité de R¹⁸, les R¹⁸ peuvent être identiques ou différents les uns des autres.]
A⁵xTiB²₍₄₋ₓ₎ (12)
[Dans la formule générale (12), A⁵ est un groupe siloxy substitué par un total de trois substituants choisis dans le groupe constitué par un groupe hydrocarbyloxy de 1 à 30 atomes de carbone et un groupe alkyle de 1 à 30 atomes de carbone ; B² est un groupe contenant du 1,3-dicarbonyle de 5 à 30 atomes de carbone ; et x est un nombre entier de 2 ou 4. Lorsqu'il existe une pluralité de A⁵, les A⁵ peuvent être identiques ou différents les uns des autres. Lorsqu'il existe une pluralité de B², les B² peuvent être identiques ou différents les uns des autres].

10. Composition de caoutchouc selon l'une quelconque des revendications 1 à 9, dans laquelle le polymère de diène conjugué modifié (a2) est un polybutadiène modifié.

11. Composition de caoutchouc selon l'une quelconque des revendications 1 à 10, qui est utilisée pour un caoutchouc vulcanisé pour bande de roulement.

12. Pneumatique produit au moyen d'une composition de caoutchouc selon l'une quelconque des revendications 1 à 11.
